# EUROPEAN PATENT APPLICATION

(11) **EP 4 428 212 A1**
(43) Date of publication of application: **11.09.2024**
(21) Application number: 24160309.1
(22) Date of filing: 28.02.2024
(51) Int. Cl.: C09K 8/035, C09K 8/524

(54) **ASPHALTENE DEPOSITION CONTROL**

(30) Priority: 10.03.2023 US 202363489527 P
(71) Applicant: Infineum International Limited, Abingdon Oxfordshire OX13 6BB (GB)
(72) Inventor: PERRYMAN, Michael, Abingdon, OX13 6BB (GB); COMPTON, Dennis, Linden, 07036 (US)
(74) Representative: Hart, Richard Joseph

(57) **Abstract**

The use of a three-way combination of additives comprising (B)(i) a metal (C₁₀ to C₄₀)hydrocarbyl-substituted hydroxybenzoate detergent; (B)(ii) a poly(C₂ to C₆)alkenyl-substituted anhydride or poly(C₂ to C₆)alkenyl-substituted acid; and (B)(iii) an aliphatic hydrocarbyl acid amide, or an aliphatic hydrocarbyl acid imide, or a combination thereof, to inhibit asphaltene precipitation from crude oil.

## Description

### FIELD OF THE INVENTION

This invention relates to inhibiting precipitation of asphaltene(s) from a crude oil, such as can arise during crude oil transportation and handling.

In particular, although not exclusively, the invention provides a method of inhibiting precipitation (*e*.*g*., inhibiting deposition) of asphaltene(s) from a crude oil having an asphaltene content by introducing a three-way combination of additives into the crude oil, the combination of additives comprising or made by admixing: (i) a metal (C₁₀ to C₄₀)hydrocarbyl-substituted hydroxybenzoate detergent having a TBN at 100% active mass of less than or equal to 135 mg KOH/g (ASTM D2896); (ii) a poly(C₂ to C₆)alkenyl-substituted anhydride or acid; and (iii) an aliphatic hydrocarbyl acid amide, or an aliphatic hydrocarbyl acid imide, or a combination of an aliphatic hydrocarbyl acid amide and an aliphatic hydrocarbyl acid imide. Further, the invention provides a crude oil composition, and a method of forming a crude oil composition, which composition and method comprises, or involves introducing, the three-way combination of additives into a crude oil having an asphaltene content, wherein the three-way combination of additives comprises or is made by admixing (i), (ii) and (iii). Still further the invention provides the use of the three-way combination of additives (i), (ii) and (iii) as an additive combination, in an effective minor amount, in a crude oil having an asphaltene content to inhibit precipitation (*e*.*g*., deposition) of asphaltene(s) from the crude oil. Still further, the invention provides an additive composition suitable for addition to a crude oil having an asphaltene content to inhibit precipitation (*e*.*g*., deposition) of asphaltene(s) from the crude oil, the additive composition comprising or made by admixing the three-way combination of additives (i), (ii) and (iii), and optionally further including a hydrocarbon diluent and/or carrier fluid.

Suitably, the invention is directed to treating a crude oil, *i.e.,* the hydrocarbon oil extracted from an underground source, having an asphaltene content. Accordingly, the invention is applicable to up-stream crude oil transportation and handling processes and operations (*e*.*g*., storage, processing and transportation of crude oil at and/or from the well-bore region) and all mid-stream crude oil processes and operations (*e*.*g*., storage, processing or upgrading such as forming a blend of crude oils, and transportation of crude oil), between the well-bore region and a crude oil refinery before the crude oil is subsequently refined in a refinery operation.

### BACKGROUND OF THE INVENTION

A crude oil typically includes asphaltenes. Asphaltenes include molecules having different and complex structures. Typically, asphaltenes comprise of polyaromatic molecules, such as unsaturated macromolecules primarily of carbon and hydrogen but also containing minor components such as sulfur, oxygen, nitrogen and/or various metals, particularly heavy metals. Asphaltenes are characterized in terms of their solubility in aromatic solvents, and they are more commonly defined as that portion of a crude oil, which is soluble in xylene and toluene, but insoluble in paraffinic solvents, such as heptane or pentane.

Asphaltenes typically exist in crude oil as soluble species and/or in the form of a colloidal dispersion, through interactions with resins present in the crude oil (*e*.*g*., asphaltenes are solvated by interactions with the resins in a crude oil). Suitably, the solubility and/or dispersibility of asphaltenes in a crude oil, and the ability of a crude oil to solvate or disperse asphaltenes therein, is delicately balanced and this balance may be disturbed and/or disrupted, for example, by pressure changes and/or temperature changes and/or compositional changes (*e*.*g*., during recovery of crude oil from an underground source, separating gas and water from a crude oil recovered from a crude oil well, upgrading a heavy crude oil to a lighter crude oil, blending two or more different crude oils together, or blending a crude oil with a hydrocarbon fluid), or by other mechanical or physical processing operations (*e*.*g*., during storage and transportation) performed on crude oil.

Typically, crude oil is recovered from an underground source *(i.e.,* an underground crude oil reservoir below ground or under the ocean bed) by drilling a bore hole to the underground source with a drilling rig to form a crude oil recovery well. Suitably, the recovery well comprises a well-bore which comprises a flow path (known in the art as a production riser) to permit crude oil to flow from the underground source to the surface (*i.e.,* the production riser permits crude oil to flow from the underground reservoir to the opening of the recovery well above ground).

The extraction of crude oil from the reservoir may be facilitated by natural processes (*e*.*g*., underground pressure to force the crude oil to the surface) and/or using secondary recovery processes and/or using enhanced recovery processes. Secondary recovery processes include flooding the reservoir with fluids (*e*.*g*., water, natural gas, air), for example injecting such fluids into the reservoir, to increase reservoir pressure; enhanced recovery processes include reducing the viscosity of the oil in the reservoir, for example, by injecting steam, surfactants and/or carbon dioxide into the reservoir.

Typically, it has been found that asphaltene deposition from a crude oil is more prevalent once the crude oil is subjected to pressure changes, compositional changes, or other mechanical or physiochemical processing operations.

Suitably, as crude oil is recovered from an underground source and then transported to the surface and beyond, the crude oil typically cools and it is subjected to reduced pressure. Further, particularly when crude oil is recovered using a secondary or enhanced recovery process, the composition of the crude oil may change significantly. These physical changes to and/or compositional modifications of a crude oil typically promotes precipitation (*e*.*g*., deposition) of asphaltene(s) from the crude oil. The increased precipitation (*e*.*g*., deposition) of asphaltene(s), typically becomes more pronounced as the crude oil flows away from the underground reservoir.

Suitably, precipitation (*e*.*g*., deposition) of asphaltene(s) from a crude oil may increase significantly during and after a recovery process used to extract the crude oil from an underground reservoir and/or may increase significantly in the resulting extracted crude oil, particularly when the crude oil is transported, stored and blended with another crude oil or hydrocarbon diluent. Accordingly, increased asphaltene precipitation (*e*.*g*., deposition) from crude oil presents problems for handling, storing, processing and/or transporting a crude oil, particularly for a crude oil which has been recovered from the well.

Further, crude oil recovered from different geographical locations typically has its own unique physical properties (*e*.*g*., viscosity and volatility) and chemical composition (*e*.*g*., asphaltene content, sulfur content). Crude oil ranges in density and consistency, from relatively thin, light weight fluid oils to extremely thick, semi-solid heavy weight oils. Lower quality heavy crude oils typically include a higher quantity of asphaltenes, and/or sulfur and other impurities, compared with higher quality lighter crude oils. The heavy grade crude oils are typically too viscous to flow through associated process flow lines (*e*.*g*., pipes or pipelines). Moreover, certain petroleum refineries may only be capable of refining the lighter crude oils and not the heavy lower grade crude oils.

Accordingly, the heavy lower grade crude oils may be diluted/blended with a different lighter grade of crude (or another hydrocarbon fluid) to provide a crude oil blend having the desirable viscosity, volatility and chemical compositional characteristics to facilitate ease of handling, storage, transportation (*e*.*g*., by pipeline, tanker or ship) to a petroleum refinery which has the capability of refining heavy crude oil feedstocks. For example, it may be desirable to blend a lower quality heavy crude oil having a high viscosity and high asphaltene content with a higher quality light crude oil having a lower viscosity and lower asphaltene content and/or with a hydrocarbon oil. However, it is recognised that mixing two different types of crude oil together may form a crude oil blend having a significantly increased tendency for asphaltene deposition. This increased deposition of asphaltenes has been found to occur in such blends of crude oil, even when no asphaltene deposition exists in either of the different types of crude oil alone constituting the blend.

Alternatively, the heavy lower grade crude oil can be upgraded to a lighter synthetic crude oil which is significantly less viscous and contains significantly less impurities. The lighter synthetic crude oil can be transported (*e*.*g*., through flow lines, such as pipes) more easily than the heavier crude oil and may also be refined at a petroleum refinery which only has the capability of processing lighter crude feedstocks.

Suitably, such crude oil processing operations may further promote precipitation of asphaltenes(s) from a crude oil.

Accordingly, precipitation of asphaltene(s) from crude oil presents problems for crude oil flow, transportation and handling in upstream operations and mid-stream operations in the oil and gas industry.

In up-stream crude oil operations, crude oil transportation (flow) typically occurs out of the ground via a production riser of the well to the processing/separation units that remove water and then to storage for removal from the wellbore region. Asphaltene precipitation can occur during transport in the riser section or above ground, for example with the mixing of oil from multiple wells into the storage tanks. Upstream transportation may include processing steps such as water separation, gas separation, solids separation or solvent wash the oil, near the production site to reduce the viscosity ahead of transportation to the refinery, for example to meet midstream or refinery specifications. Accordingly, upgrading may be viewed as improving the properties of a crude oil for subsequent operations, resulting in an upgraded crude oil, as opposed to resulting in a refined product. Upstream processing steps may additionally or alternatively involve the use of other additives such as for water separation, gas separation, wax deposit prevention, asphaltene deposit prevention, scale prevention and corrosion prevention. Upstream transportation of crude oil is typically accomplished with pipelines.

All of the above-mentioned processing, storage and transportation steps may also take place during midstream operations, *i.e.,* the processing, transportation and storage of crude oil from the wellbore region to a petroleum refinery before commencement of a refinery operation. For example, both upstream and midstream operations can also include storage and blending in relation to their respective activities. While upstream transportation typically occurs via pipeline (although may additionally or alternatively include other transportation methods), midstream processing and transportation may involve a variety of transportation methods including but not limited to the use of trucks, rail, ships (oil tankers), barges and pipelines as well as multiple storage locations between transportation steps from the wellbore region and petroleum refinery and further storage outside an oil refinery.

On the other hand, downstream operations are generally understood to commence with (at the point of) refining activities and include subsequent exploitation of the refined products obtained, for example as lubricant base stocks, finished lubricants, petrochemicals and fuels such as gasoline, diesel or heavy fuel oil.

Suitably, precipitation (*e*.*g*., deposition) of asphaltene(s) from crude oil presents problems for up-stream and mid-stream crude oil processes, as the formation of asphaltene deposits may plug and/or restrict oil flow in pipes, safety shut off valves, separator equipment (*e.g.,* to remove gas and water from the crude oil), flow lines (*e.g.,* pipelines for transporting crude oil), blending equipment, storage vessels and associated process transport mechanisms. To overcome these problems, the equipment is ordinarily taken offline and cleaned mechanically and/or cleaned with chemicals, resulting in lost production time and increased operating costs.

EP 3 760 696A provides a method for reducing fouling and/or asphaltene agglomeration (or flocculation) in midstream processes and transportation and in upstream transportation of, including storage and blending, a crude oil. The method comprises providing in the oil an additive combination comprising: (i) a polyalkenyl-substituted carboxylic acid or anhydride; and (ii) a metal detergent system comprising a hydrocarbyl-substituted hydroxybenzoate metal salt, or a hydrocarbyl-substituted sulfonate metal salt or a mixture of both salts or a complex thereof. Improvements in deposition of asphaltene(s) from a crude oil are exemplified when a crude oil is heated in a simulated refinery operation and when the crude oil includes an additive combination comprising an overbased calcium salicylate detergent having a TBN of 225 and a polyisobutenyl succinimide.

Additional references of interest include US 10,870,809.

Accordingly, there is a need to inhibit asphaltene precipitation (*e*.*g*., deposition) from a crude oil, especially a crude oil which has been recovered from an underground crude oil source (*e*.*g*., obtained from a crude oil reservoir), and before the crude oil is subjected to a refinery operation.

Accordingly, there is a need to inhibit asphaltene precipitation (*e*.*g*., deposition) from crude oil in up-stream crude oil processes/operations, such as transportation, storage and blending processes of a crude oil, particularly said up-stream crude oil processes which may be performed on crude oil that has been recovered from underground crude oil source, which includes a crude oil exiting from the production riser section of the well and crude oil above ground.

Accordingly, there is a need to inhibit asphaltene precipitation (*e*.*g*., deposition) from crude oil in mid-stream crude oil processes/operations (*e*.*g*., storage, processing, such as forming a blend of crude oils, transportation of crude oil between the well bore region and a crude oil refinery) and before the crude oil is subjected to a refinery operation at a petroleum refinery.

Accordingly, there is a need to inhibit asphaltene precipitation (*e*.*g*., deposition) from crude oil to improve the flow characteristics of the crude oil, for example a crude oil stream which has been recovered from a crude oil well (including a crude oil stream exiting the production riser), to facilitate the ease of handling and/or transportation of the crude oil by associated transport mechanisms. Suitably, the crude oil stream may be flowing from the crude oil well (*e*.*g*., exiting the riser section of the well), it may be being processed at the wellbore region, or it may be being transported from the wellbore region to a petroleum refinery by one or more transportation stages.

Accordingly, there is a need to inhibit asphaltene precipitation (*e*.*g*., deposition) from a crude oil blend comprising two or more different types of crude oil and/or a crude oil blend comprising one or more different types of crude oil and a hydrocarbon fluid.

Suitably, this may improve the overall efficiency, enhance oil flow rates and output, and reduce operational costs associated with handling, storing, transporting, processing (*e*.*g*., blending two or more crude oils) crude oil(s) which has been, and or is being, recovered from a crude oil well and before the crude oil is subsequently refined in a petroleum refinery operation at a petroleum refinery.

### SUMMARY OF INVENTION

The invention seeks to solve some of the technical problems associated with up-stream and mid-stream crude oil processes/operations (*e*.*g*., handling, storing, transporting and/or processing a crude) due to the presence of asphaltenes in said crude oil, especially such up-stream and mid-stream crude oil processes/operations performed on a crude oil emerging from or downstream of the production riser of the crude oil well and/or travelling along pipelines, and before the crude oil is subsequently refined in a crude oil refinery operation (*i*.*e*., before commencement of down-stream crude oil processes/operations).

Suitably, the invention provides improved method(s) for handling, storing, transporting and/or processing a crude oil which has been recovered from a crude oil well due to the presence of asphaltene(s) in the crude oil and before the crude oil is subsequently refined in a crude oil refinery operation, preferably before the crude oil arrives at a petroleum refinery.

Suitably, the invention is applicable to up-stream crude oil transportation, storage and/or processes which may be employed after the crude oil has been recovered from a crude oil well, which includes crude oil exiting the production riser.

Suitably, the invention is applicable to all mid-stream crude oil transportation, storage and/or processes which may be employed before the crude oil is refined in a refinery operation, preferably before the crude oil arrives at a crude oil refinery.

Accordingly, the invention provides a process for inhibiting the precipitation (*e*.*g*., deposition) of asphaltenes from a crude oil, which crude oil may include a blend of two or more different types of crude oil or a blend of one or more crude oil(s) and a hydrocarbon fluid, by introducing a three-way combination of additives into the crude oil to inhibit asphaltene precipitation from the crude oil. Advantageously, the flow characteristics of the crude oil may be improved to facilitate the ease of handling and/or transportation of the crude oil by associated transport mechanisms. Additionally, or alternatively, inhibition of asphaltene precipitation from the crude oil may reduce down time when equipment is ordinarily taken offline and cleaned mechanically and/or cleaned with chemicals, thereby increasing operational running and lowering operating costs.

Accordingly, the invention provides an improved method for transporting a crude oil which has been recovered from a crude oil well or is exiting the production riser of the crude oil well. Suitably, the crude oil may be transported by a crude oil flow line, such as a pipe, tube or pipeline, by road vehicle, by railway vehicle, or by watercraft, preferably by a crude oil flow line.

Thus, in a first aspect, the invention provides a method for inhibiting precipitation (*e*.*g*., deposition) of asphaltene(s) from a crude oil having an asphaltene content, the method comprising: providing, in a major amount, a crude oil having an asphaltene content; and introducing into the crude a three-way combination of additives (B)(i), (B)(ii) and (B)(iii), in an effective minor amount, to inhibit precipitation of asphaltene(s) from the crude oil, wherein the combination of additives (B)(i), (B)(ii) and (B)(iii) comprises or is made by admixing:
(B)(i) a metal (C₁₀ to C₄₀)hydrocarbyl-substituted hydroxybenzoate detergent, as defined and identified herein, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896; (B)(ii) a poly(C2 to C6)alkenyl-substituted acid anhydride or poly(C2 to C6)alkenyl-substituted acid, as defined or identified herein; and
(B)(iii) an aliphatic hydrocarbyl acid amide, as defined or identified herein, or an aliphatic hydrocarbyl acid imide, as defined or identified herein, or a combination thereof, wherein said aliphatic hydrocarbyl acid amide and said aliphatic hydrocarbyl acid imide is each independently obtainable by reacting (B)(iii)(a) an aliphatic alkylene polyamine, as defined or identified herein, with (B)(iii)(b) an aliphatic (C9 to C29)hydrocarbyl-substituted monocarboxylic acid or derivative thereof, as defined or identified herein, or with (B)(iii)(c) an aliphatic hydrocarbyl-substituted anhydride, -diacid or -diol, as defined or identified herein, and wherein the aliphatic alkylene polyamine has at least two carbon atoms and at least two amine groups wherein at least one of the amine groups is a primary amine group.

Unexpectedly, it has been found, that by adding the three-way combination of additives (B)(i), (B)(ii) and (B)(iii), as defined and identified herein, to a crude oil typically provides a synergistic inhibition of asphaltene(s) precipitation from the crude oil. Further, the observed synergistic inhibition of asphaltene(s) precipitation from crude oil using the three-way combination of said additives may be evident compared to the cumulative effect which is achievable using each of the respective three additives alone and/or which is achievable using a two-way combination of two of the respective additives (B)(i), (B)(ii) and/or (B)(iii). In other words, the presence of all three additives (B)(i), (B)(ii) and (B)(iii) is required to achieve the desired, and unexpected, synergistic inhibition of asphaltene(s) precipitation from crude oil.

Still further, the observed synergistic inhibition of asphaltene(s) precipitation from crude oil which may be achievable using the three-way combination of said additives (B)(i), (B)(ii) and (B)(iii), as defined and identified herein, appears even more remarkable as current petroleum industry practices, albeit in relation to petroleum refinery processes, suggest the use of a high TBN hydroxybenzoate detergent, particularly a two-way additive combination comprising of a high TBN hydroxybenzoate detergent and a polyalkenyl succinic anhydride, to inhibit deposition of asphaltene(s) from crude oil.

Indeed, it has been observed that the use of a low TBN hydroxybenzoate detergent (B)(i) alone, in the processes of the present invention typically provides significantly inferior asphaltene precipitation performance compared to the use of a corresponding high TBN hydroxybenzoate detergent alone. Further, the use of the low TBN hydroxybenzoate detergent (B)(i) alone may actually promote undesired asphaltene precipitation from the crude oil, whereas the use of the high TBN hydroxybenzoate detergent alone typically inhibits precipitation of asphaltene(s) from the oil. Furthermore, although the use of a two-way additive combination of a low TBN hydroxybenzoate detergent (B)(i) and polyalkenyl anhydride or acid (B)(ii), in the processes of the present invention, may provide a reduction of asphaltene precipitation from the crude oil compared to the use of the low TBN hydroxybenzoate detergent alone, the two-way additive combination including the low TBN hydroxybenzoate detergent provides significantly inferior asphaltene precipitation performance compared to the use of a corresponding two-way additive combination comprising a high TBN hydroxybenzoate detergent and polyalkenyl anhydride or acid.

However, and completely unexpectedly, it has been found that if a further third additive comprising (B)(iii) an aliphatic hydrocarbyl acid amide, as defined or identified herein, or an aliphatic hydrocarbyl acid imide, as defined or identified herein, is introduced into the crude oil in addition to the two-way additive combination of a low TBN hydroxybenzoate detergent (B)(i) and polyalkenyl anhydride or acid (B)(ii), thereby effectively introducing a three-way additive combination into the crude oil, then this typically not only provides significantly improved inhibition of asphaltene precipitation compared to the use of the two-way additive combination but also typically provides a significant synergistic inhibition of asphaltene(s) precipitation from the crude oil.

In complete contrast, it has been found that if the same said further third additive comprising (B)(iii) an aliphatic hydrocarbyl acid amide, as defined or identified herein, or an aliphatic hydrocarbyl acid imide, as defined or identified herein, is introduced into the crude oil in addition to the corresponding two-way additive combination of a high TBN hydroxybenzoate detergent (B)(i) and polyalkenyl anhydride or acid (B)(ii), thereby introducing a corresponding high TBN detergent three-way additive combination into the crude oil, then this typically not only increases undesired asphaltene precipitation from the crude oil compared to the use of the two-way high TBN detergent additive combination but also typically provides significantly inferior inhibition of asphaltene deposition compared with the corresponding three-way additive combination including the low TBN hydroxybenzoate detergent.

Still further, it has been found that the extent of inhibition of asphaltene precipitation from a crude oil using the three-way additive combination of (B)(i), (B)(ii) and (B)(iii), as defined and identified herein, in the processes of the invention may be further enhanced by appropriate selection of the amount of each additive and/or the ratio of the amounts of each respective additive introduced into the crude oil.

Suitably, in each and every aspect of the invention, the ratio of the total combined individual amounts of additives (B)(i) and (B)(ii) on a mass % active ingredient basis to total amount of additive(s) (B)(iii) on a mass % active ingredient basis in the crude oil (*i.e.,* total mass % of (B)(i) and (B)(ii) divided by total mass % of (B)(iii), on active ingredient basis), based on the total amount of crude oil, is in the range of 20:1 to 1:1, such as 10:1 to 1:1, such as 8:1 to 1:1, such as 5:1 to 1:1, such as 5:1 to 1.5:1.

Suitably, in each and every aspect of the invention, the ratio of the total combined individual amounts of additives (B)(i) and (B)(ii) on a mass % active ingredient basis to total amount of additive(s) (B)(iii) on a mass % active ingredient basis in the crude oil (*i.e.,* total mass % of (B)(i) and (B)(ii) divided by total mass % of (B)(iii), on active ingredient basis), based on the total amount of crude oil, is greater than 1, such as greater than 1.5, such as greater than 2.

Suitably, in each and every aspect of the invention, the ratio of the total combined individual amounts of additives (B)(i) and (B)(ii) on a mass % active ingredient basis to total amount of additive(s) (B)(iii) on a mass % active ingredient basis in the crude oil (*i.e.,* total mass % of (B)(i) and (B)(ii) divided by total mass % of (B)(iii), on active ingredient basis), based on the total amount of crude oil, is less than or equal to 20, such as less than or equal to 10, such as less than or equal to 8, such as less than or equal to 5.

Suitably, in each and every aspect of the invention, additive (B)(i), the low TBN hydroxybenzoate detergent, is introduced into the crude oil in an amount, based on mass % active ingredient, that is greater than the amount of additive (B)(ii), the polyalkenyl anhydride or acid.

Suitably, in each and every aspect of the invention, additive (B)(i), the low TBN hydroxybenzoate detergent, is introduced into the crude oil in an amount, based on mass % active ingredient, that is greater than the amount of additive (B)(iii), the aliphatic hydrocarbyl acid amide and/or an aliphatic hydrocarbyl acid imide.

Suitably, in a preferred embodiment of each aspect of the invention, additive (B)(i), the low TBN hydroxybenzoate detergent, is introduced into the crude oil in an amount, based on mass % active ingredient, that is greater than each of the individual amounts of additive (B)(ii), the polyalkenyl anhydride or acid, and additive (B)(iii), the aliphatic hydrocarbyl acid amide and/or an aliphatic hydrocarbyl acid imide.

Suitably, in a further preferred embodiment of each aspect of the invention, additive (B)(i), the low TBN hydroxybenzoate detergent, is introduced into the crude oil in an amount, based on mass % active ingredient, that is greater than the total combined individual amounts of each of additives (B)(ii), the polyalkenyl anhydride or acid, and (B)(iii), the aliphatic hydrocarbyl acid amide and/or an aliphatic hydrocarbyl acid imide.

Suitably, in each and every aspect of the invention, the mass %:mass %:mass % ratio of the amount of additive (B)(i) relative to the amount of additive (B)(ii) relative to the amount of additive (B)(iii) on an active ingredient basis in the crude oil, based on the total amount of crude oil, is in the range of 10:1:1 to 1.5:1:1, such as 8:1:1 to 1.5:1:1, such as 8:1:1 to 2:1:1, such as 5:1:1 to 2:1:1.

Suitably, in each and every aspect of the invention, the treat rate (amount) of the three-way additive combination of (B)(i), (B)(ii) and (B)(iii), on an active ingredient basis, is greater than or equal to 5, such as greater than or equal to 10, such as greater than or equal to 15, such as greater than or equal to 30, such as greater than or equal to 45, such as greater than or equal to 60, such as greater than or equal to 75, such as greater than or equal to 100, such as greater than or equal to 125, such as preferably greater than or equal to 150, ppm by mass based on the total mass of crude oil.

Suitably, in each and every aspect of the invention, the treat rate of the three-way additive combination of (B)(i), (B)(ii) and (B)(iii), on an active ingredient basis, is less than or equal to 20,000, such as less than or equal to 15,000, such as less than or equal to 10,000, such as less than or equal to 7000, such as less than or equal to 5000, such as less than or equal to 3000, such as less than or equal to 2500, such as less than or equal to 1500, such as less than or equal to 1000, such as less than or equal to 750, such as less than or equal to 500, ppm by mass based on the total mass of crude oil.

Suitably, in each and every aspect of the invention, the treat rate of the three-way additive combination of (B)(i), (B)(ii) and (B)(iii), on an active ingredient basis, may be from 5 to 20,000 ppm, such as from 10 to 15,000 ppm, such as 15 to 10,000 ppm, such 50 to 7000 ppm, such as from 75 to 5000 ppm, such as from 100 to 3000 ppm, such from 150 to 2500 ppm, such as from 75 to 2000 ppm, such from 75 to 1500 ppm, such as from 100 to 1000 ppm, such as from 125 to 750 ppm, such as from 150 to 500 ppm by mass based on the total mass of crude oil.

The three-way additive combination of (B)(i), (B)(ii), and (B)(iii) may comprise an effective amount of 10 ppm or less, such as 5 ppm or less of additional ingredients, alternately the three-way additive combination of (B)(i), (B)(ii), and (B)(iii) may have an effective amount of 0 ppm of additional active ingredients.

The three-way additive combination of (B)(i), (B)(ii) and (B)(iii) may be absent additional components. The term "absent" as it relates to components included within the three-way additive combination compositions described herein and the claims thereto means that the particular component is present at 0 wt%, based upon the weight of the three-way additive combination composition, or if present in the three-way additive combination composition the component is present at levels that do not impact the three-way additive combination composition properties, such as less than 10 ppm, or less than 1 ppm or less than 0.001 ppm.

Suitably, the three-way combination of additives B(i), B(ii) and B(iii) may be introduced into a crude oil during any up-stream and/or mid-stream crude oil processes/operations performed on a crude oil, *i.e.,* before the crude oil is subsequently refined in a petroleum refinery operation in a down-stream process/operation. Suitably, such up-stream and mid-stream crude oil operations include processing, storage and transportation steps, including blending and separation steps.

Suitably, the three-way combination of additives B(i), B(ii) and B(iii) is introduced into a crude oil before the crude oil is subjected to any down-stream crude oil process/operations, such as before the crude oil is subsequently refined in a crude oil refinery operation, suitably before the crude oil arrives at a crude oil refinery.

Suitably, the three-way combination of additives B(i), B(ii) and B(iii) may be introduced into a crude oil, especially a crude oil stream, after the crude oil has been recovered from an underground crude oil reservoir. However, it will be appreciated that the three-way combination of additives B(i), B(ii) and B(iii) may be introduced into to a crude oil, especially a crude oil stream, that is present in the well bore flow path (*e.g.,* the production riser).

The method of the first aspect of the invention is particularly suited for improving the transportation of a crude oil during up-stream and/or mid-stream crude oil operations. Suitably, the flowability of the crude oil may be significantly improved due to inhibition of precipitation of asphaltene(s) from the oil.

Thus, according to a second aspect the invention provides a method for improving the transportation of a crude oil, the method comprising the steps of: (i) introducing a minor amount of the three-way combination of additives (B)(i), (B)(ii) and (B)(iii) as defined in the first aspect of the invention, and as further defined and identified herein, into a major amount of crude oil having an asphaltene content; and (ii) transporting said crude oil.

Suitably, the crude oil is transported by a crude oil flow line (*e*.*g*., pipe, tubular structure, pipeline), by road vehicle, by railway vehicle or by watercraft, or a combination thereof. Preferably, the crude oil is transported by a crude oil flow line, such as a pipe, tubular structure or pipeline.

Suitably, in accordance with an embodiment of each and every aspect of the invention, the crude oil comprises a crude oil stream. Suitably, the three-way combination of additives (B)(i), (B)(ii) and (B)(iii) is introduced into the crude oil stream. Suitably, the crude oil stream is transported by a crude oil flow line, for example, a pipe, tubular structure or pipeline.

Suitably, the crude oil stream may be flowing from and exiting the crude oil recovery well *i.e.,* flowing from the production riser of the well. Suitably, the crude oil stream may be being transported to and/or from a crude oil processing operation (*e*.*g*., an operation to remove gas and water from the crude oil or a blending operation including the crude oil). Suitably, the crude oil stream may be being transported to a petroleum refinery in one or more transportation stages, such as by pipe/pipeline, by road vehicle, by railway vehicle or by watercraft, or a combination thereof. It will therefore be appreciated that the three-way combination of additives may be introduced into the crude oil stream at various stages of up-stream and/or mid-stream crude oil processes/operations.

Accordingly, transportation of a crude oil includes transportation of the oil through pipes in its transfer from extraction point to the refinery.

Alternatively, or additionally, in accordance with an embodiment of each and every aspect of the invention, the three-way combination of additives (B)(i), (B)(ii) and (B)(iii) is introduced into the crude oil before transportation of the crude oil. Suitably, the three-way combination of additives may be introduced into the crude oil during storage of the crude oil (*e*.*g*., during storage of the crude oil in a storage tank) and/or during a crude oil processing operation performed on the crude oil (*e*.*g*., a processing operation to remove gas and water from the recovered crude oil or a blending operation including the crude oil).

Suitably, each and every aspect of the invention is particularly well-suited for a crude oil which has been or is being recovered from a crude oil reservoir using a secondary or enhanced recovery process, as the composition of crude oil may change significantly using such recovery processes thereby promoting increased precipitation of asphaltene(s) from the crude oil.

Suitably, in a preferred embodiment of each and every aspect of the invention, the crude oil comprises a crude oil which is being or has been recovered from a crude oil reservoir using a secondary and/or enhanced crude oil recovery process.

In accordance with a third aspect, the invention provides a crude oil composition comprising or made by admixing: (A) a major amount of crude oil having an asphaltene content; and (B) a minor amount of a three-way combination of additives (B)(i), (B)(ii) and (B)(iii) to inhibit precipitation of asphaltene(s) from the crude oil, wherein the combination of additives (B)(i), (B)(ii) and (B)(iii) is as defined in the first aspect of the invention, and as further defined and identified herein.

In accordance with a fourth aspect, the present invention provides a method of preparing a crude oil composition of the third aspect of the invention, the method comprising introducing a minor amount of a three-way combination of additives (B)(i), (B)(ii) and (B)(iii) as defined in the first aspect of the invention, and as further defined and identified herein, into a major amount of a crude oil having an asphaltene content.

In accordance with a fifth aspect, the present invention provides the use of a three-way combination of additives (B)(i), (B)(ii) and (B)(iii) as defined in the first aspect of the invention, and as further defined and identified herein, in an effective minor amount in a crude oil having an asphaltene content to inhibit deposition of asphaltene(s) from the crude oil.

Suitably, in each and every aspect of the invention, introduction of the three-way combination of additives (B)(i), (B)(ii), and (B)(iii) into a crude oil may be accomplished by: (i) separate introduction of each additive; (ii) introduction of a two-way combination of additives and separate introduction of the third additive; or (iii) essentially simultaneous introduction of each three additives (B)(i), (B)(ii) and (B)(iii). Essentially simultaneous introduction of each three additives is preferred and this may be accomplished by introduction of an additive composition comprising the three-way combination of additives (B)(i), (B)(ii), and (B)(iii) into a crude oil.

Thus, according to a sixth aspect, the present invention provides an additive composition suitable for introduction into to a crude oil having an asphaltene content to inhibit precipitation of asphaltene(s) from the crude oil, the additive composition comprising or made by admixing: a hydrocarbon diluent fluid; and a three-way combination of each of said additive(s) (B)(i), (B)(ii), and (B)(iii) as defined in the first aspect of the invention, and as further defined and identified herein.

Suitably, in the additive composition of the sixth aspect of the invention, each of the additives (B)(i), (B)(ii), and (B)(iii) is present in an amount and in appropriate relative mass %:mass % ratios to permit introduction of the additive composition into a crude oil and provide the crude oil with the preferred relative mass %:mass % ratio(s) of additives and preferred amounts of each additive(s), as defined herein.

Suitably, in the additive composition of the sixth aspect of the invention, the ratio of the total combined individual amounts of additives (B)(i) and (B)(ii) on a mass % active ingredient basis to total amount of additive(s) (B)(iii) on a mass % active ingredient basis in the additive composition (*i*.*e*., total mass % of (B)(i) and (B)(ii) divided by total mass % of (B)(iii), on active ingredient basis), based on the total amount of additive composition, is in the range of 20:1 to 1:1, such as 10:1 to 1:1, such as 8:1 to 1:1, such as 5:1 to 1:1, such as 5:1 to 1.5:1.

Suitably, the total combined individual amounts of additives (B)(i) and (B)(ii) in the additive composition is greater than the total amount of additive (B)(iii) in the additive composition, on an active ingredient basis, based on the total amount of additive composition. Suitably, the ratio of the total combined individual amounts of additives (B)(i) and (B)(ii) on a mass % active ingredient basis to total amount of additive(s) (B)(iii) on a mass % active ingredient basis in the additive composition (*i*.*e*., total mass % of (B)(i) and (B)(ii) divided by total mass % of (B)(iii), on active ingredient basis), based on the total amount of additive composition, is greater than 1, such as greater than 1.5, such as greater than 2.

Suitably, the ratio of the total combined individual amounts of additives (B)(i) and (B)(ii) on a mass % active ingredient basis to total amount of additive(s) (B)(iii) on a mass % active ingredient basis in the additive composition (*i*.*e*., total mass % of (B)(i) and (B)(ii) divided by total mass % of (B)(iii), on active ingredient basis), based on the total amount of additive composition, is less than or equal to 20, such as less than or equal to 10, such as less than or equal to 8, such as less than or equal to 5.

Suitably, in the additive composition, additive (B)(i), the low TBN hydroxybenzoate detergent, is present in an amount, based on mass % active ingredient, that is greater than the amount of additive (B)(ii), the polyalkenyl anhydride or acid.

Suitably, in the additive composition, additive (B)(i), the low TBN hydroxybenzoate detergent, is present in an amount, based on mass % active ingredient, that is greater than the amount of additive (B)(iii), the aliphatic hydrocarbyl acid amide and/or an aliphatic hydrocarbyl acid imide.

Suitably, in the additive composition, additive (B)(i), the low TBN hydroxybenzoate detergent, is present in an amount, based on mass % active ingredient, that is greater than each of the individual amounts of additive (B)(ii), the polyalkenyl anhydride or acid, and additive (B)(iii), the aliphatic hydrocarbyl acid amide and/or an aliphatic hydrocarbyl acid imide.

Suitably, in the additive composition, additive (B)(i), the low TBN hydroxybenzoate detergent, is present in an amount, based on mass % active ingredient, that is greater than the total combined individual amounts of each of additives (B)(ii), the polyalkenyl anhydride or acid, and (B)(iii), the aliphatic hydrocarbyl acid amide and/or an aliphatic hydrocarbyl acid imide.

Suitably, in the additive composition, the mass %:mass %:mass % ratio of the amount of additive (B)(i) relative to the amount of additive (B)(ii) relative to the amount of additive (B)(iii) in the composition, on an active ingredient basis, based on the total amount of additive composition, is in the range of 10:1:1 to 1.5:1:1, such as 8:1:1 to 1.5:1:1, such as 8:1:1 to 2:1:1, such as 5:1:1 to 2:1:1.

Suitably, in the additive composition, additive (B)(i) is typically present in an amount of 30 to 85, such as 40 to 80, such as 40 to 75, mass % on an active ingredient basis, based on the total amount of additive composition.

Suitably, in the additive composition, additive (B)(ii) is typically present in an amount of 5 to 40, such as 10 to 40, such as 10 to 30, mass % on an active ingredient basis, based on the total amount of additive composition.

Suitably, in the additive composition, additive (B)(iii) is typically present in an amount of 10 to 45, such as 15 to 45, such as 15 to 40, mass % on an active ingredient basis, based on the total amount of additive composition.

Suitably, in each and every aspect of the invention, additive (B)(i) the metal (C₁₀ to C₄₀)hydrocarbyl-substituted hydroxybenzoate detergent comprises a metal (C₁₀ to C₄₀)hydrocarbyl-substituted salicylate detergent, as further defined herein.

Suitably, in each and every aspect of the invention, the metal of the metal (C₁₀ to C₄₀)hydrocarbyl-substituted hydroxybenzoate detergent (B)(i) comprises an alkaline earth metal, especially calcium.

In each and every aspect of the invention, a highly preferred metal hydrocarbyl-substituted hydroxybenzoate detergent (B)(i) comprises a calcium (C₁₀ to C₄₀)hydrocarbyl-substituted salicylate detergent, as further defined herein.

Suitably, in each and every aspect of the invention, the metal hydrocarbyl-substituted hydroxybenzoate detergent (B)(i) is an essentially neutral detergent.

Suitably, in each and every aspect of the invention, additive (B)(i), the metal (C₁₀ to C₄₀)hydrocarbyl-substituted hydroxybenzoate detergent (B)(i), as defined and identified herein, particularly the highly preferred calcium (C₁₀ to C₄₀)hydrocarbyl-substituted salicylate detergent, has a total base number (TBN) at 100% active mass of less than or equal to 135, such as less than or equal to 125, such as less than or equal to 100, such as less than or equal to 75, such as less than or equal to 70, mg KOH/g as measured by ASTM D2896.

Suitably, in each and every aspect of the invention, additive (B)(i), the metal (C₁₀ to C₄₀)hydrocarbyl-substituted hydroxybenzoate detergent (B)(i), as defined and identified herein, particularly the highly preferred calcium (C₁₀ to C₄₀)hydrocarbyl-substituted salicylate detergent, may have a total base number (TBN) at 100% active mass of greater than or equal to 20, such as greater than or equal to 30, such as greater than or equal to 40, such as greater than or equal to 50, such as greater than or equal to 60, mg KOH/g as measured by ASTM D2896.

Suitably, in an embodiment of each and every aspect of the invention, additive (B)(i), the metal (C₁₀ to C₄₀)hydrocarbyl-substituted hydroxybenzoate detergent (B)(i), as defined and identified herein, particularly the highly preferred calcium (C₁₀ to C₄₀)hydrocarbyl-substituted salicylate detergent, may have a total base number (TBN) at 100% active mass of from 20 to 135, such as 30 to 125, such as 40 to 100, such as 50 to 75, such as 60 to 70, mg KOH/g as measured by ASTM D2896.

Unexpectedly, it has been found that the desired technical effect of reduced asphaltene deposition (i.e., precipitation) from crude oil may diminish significantly when the total base number (TBN) at 100% active mass of additive (B)(i), the metal (C₁₀ to C₄₀)hydrocarbyl-substituted hydroxybenzoate detergent (B)(i), as defined and identified herein, particularly the highly preferred calcium (C₁₀ to C₄₀)hydrocarbyl-substituted salicylate detergent, is greater than or equal to 135, especially greater than or equal to 150, mg KOH/g as measured by ASTM D2896.

Further, it has been found that the desired technical effect of reduced asphaltene deposition (*i*.*e*., precipitation) from crude oil may be enhanced by lowering the total base number (TBN) at 100% active mass of additive (B)(i), the metal (C₁₀ to C₄₀)hydrocarbyl-substituted hydroxybenzoate detergent (B)(i), as defined and identified herein, particularly the highly preferred calcium (C₁₀ to C₄₀)hydrocarbyl-substituted salicylate detergent, from less than or equal to 135 mg KOH/g as measured by ASTM D2896 to a lower TBN value, as defined and identified herein.

Suitably, in each and every aspect of the invention, additive (B)(i), the metal (C₁₀ to C₄₀)hydrocarbyl-substituted hydroxybenzoate detergent (B)(i), as defined and identified herein, may consist essentially of a single metal (C₁₀ to C₄₀)hydrocarbyl-substituted hydroxybenzoate detergent having the desired total base number, as defined and identified herein.

Alternatively, in each and every aspect of the invention, additive (B)(i), the metal (C₁₀ to C₄₀)hydrocarbyl-substituted hydroxybenzoate detergent (B)(i), as defined and identified herein, may comprise a mixture of one or more different metal (C₁₀ to C₄₀)hydrocarbyl-substituted hydroxybenzoate detergents, as defined and identified herein. Suitably, such a mixture of said one or more different metal (C₁₀ to C₄₀)hydrocarbyl-substituted hydroxybenzoate detergents may be used to provide a resulting detergent blend having a desired total base number, as defined and identified herein.

Suitably, in each and every aspect of the invention, additive (B)(i), the metal (C₁₀ to C₄₀)hydrocarbyl-substituted hydroxybenzoate detergent, is present, on an active ingredient basis, in an amount of greater than or equal to 5, such as greater than or equal to 10, such as greater than or equal to 75, such as greater than or equal to 100, ppm by mass based on the total mass of crude oil.

Suitably, in each and every aspect of the invention, additive (B)(i), the metal (C₁₀ to C₄₀)hydrocarbyl-substituted hydroxybenzoate detergent, is present, on an active ingredient basis, in an amount of less than or equal to 10,000, such as less than or equal to 5000, such as less than or equal to 1000, such as less than or equal to 750, such as less than or equal to 500, ppm by mass based on the total mass of crude oil.

Suitably, in each and every aspect of the invention, additive (B)(ii), the poly(C2 to C6)alkenyl-substituted acid anhydride or poly(C2 to C6)alkenyl-substituted acid, comprises a poly(C2 to C6)alkenyl-substituted succinic anhydride or poly(C2 to C6)alkenyl-substituted succinic acid, more preferably a polyisobutenyl-substituted succinic anhydride or polyisobutenyl-substituted succinic acid.

Suitably, in each and every aspect of the invention, the number average molecular weight (Mn) of the poly(C2 to C6)alkenyl chain(s) of said poly(C2 to C6)alkenyl-substituted acid anhydride or poly(C2 to C6)alkenyl-substituted acid (B)(ii), as defined and identified herein, is from 400 to 4000, such as 400 to 3000, daltons.

Suitably, in each and every aspect of the invention, a highly preferred additive (B)(ii) comprises polyisobutenyl succinic anhydride or polyisobutenyl succinic acid wherein the polyisobutenyl substituent has a Mn of from 400 to 3000 daltons, especially a polyisobutenyl succinic anhydride wherein the polyisobutenyl substituent has a Mn of from 400 to 3000 daltons.

Suitably, in each aspect of the invention, additive (B)(ii), the poly(C2 to C6)alkenyl-substituted acid anhydride or poly(C2 to C6)alkenyl-substituted acid (B)(ii), as defined and identified herein, is present in an amount, on an active ingredient basis, of greater than or equal to 5, such as greater than or equal to 10, such as greater than or equal to 15, such as greater than or equal to 20, such as greater than or equal to 25, ppm by mass based on the total mass of crude oil.

Suitably, in each and every aspect of the invention, the poly(C2 to C6)alkenyl-substituted acid anhydride or poly(C2 to C6)alkenyl-substituted acid (B)(ii), as defined and identified herein, is present, on an active ingredient basis, in an amount of less than or equal to 5000, such as less than or equal to 3000, such as less than or equal to 1000, such as less than or equal to 750, such as less than or equal to 500, such as less than or equal to 250, ppm by mass based on the total mass of crude oil.

The aliphatic alkylene polyamine (B)(iii)(a) which may be used to form additive (B)(iii), as defined and identified herein, has at least two carbon atoms and at least two amine groups wherein at least one of the amine groups is a primary amine group. Suitably, said primary amine group is bonded to first carbon atom of an alkanediyl radical and said second amine group is bonded to a different carbon atom of said alkanediyl radical, *i.e.,* the alkanediyl radical has at least two carbon atoms. Suitably, the term "alkylene polyamine" embraces alkyl polyamines which have at least 2 amine groups and from 2 to 60, preferably 2 to 40, more preferably 2 to 20, even more preferably 3 to 20, even more preferably 3 to 12, especially 3 to 10 total number of carbon atoms. Suitably, the term "alkylene polyamine" embraces polyalkylene polyamine(s) which include two or more alkanediyl radical repeating units and have at least 3 amine groups.

Suitably, in each and every aspect of the invention, the aliphatic alkylene polyamine (B)(iii)(a) which may be used to form additive (B)(iii), as defined and identified herein, comprises from 2 to 20 total number of carbon atoms.

Suitably, in each and every aspect of the invention, the aliphatic alkylene polyamine (B)(iii)(a) which may be used to form additive (B)(iii), as defined and identified herein, comprises from 2 to 10 total number of nitrogen atoms (*i.e.,* includes a total number of from 2 to 10 amine groups), such as from 3 to 10 amine groups.

Suitably, in each and every aspect of the invention, the aliphatic alkylene polyamine (B)(iii)(a) which may be used to form additive (B)(iii), as defined and identified herein, includes a total number of two primary amine groups.

Suitably, in each and every aspect of the invention, the aliphatic alkylene polyamine (B)(iii)(a) which may be used to form additive (B)(iii), as defined and identified herein, includes from 1 to 8 secondary amine groups.

Suitably, in an embodiment of each and every aspect of the invention, the aliphatic alkylene polyamine (B)(iii)(a) which may be used to form additive (B)(iii), as defined and identified herein, comprises an alkyl polyamine, as defined and identified herein, having from 2 to 60, such as 2 to 40, such as 2 to 20, such as 3 to 20, such as 3 to 12, such as 3 to 10 total number of carbon atoms.

Suitably, in an alternative embodiment of each and every aspect of the invention, the aliphatic alkylene polyamine (B)(iii)(a) which may be used to form additive (B)(iii), as defined and identified herein, comprises a polyalkylene polyamine, especially a polyethylene polyamine.

Suitably, in each and every aspect of the invention, highly preferred alkylene polyamine(s) (B)(iii)(a) which may be used to form additive (B)(iii), as defined and identified herein, comprise diethylene triamine, triethylene tetramine, tetraethylene pentaamine, pentaethylene hexamine, and mixtures thereof. Diethylene triamine, tetraethylene pentaamine and pentaethylene hexamine are particularly preferred, especially tetraethylene pentaamine.

Suitably, the most preferred aliphatic alkylene polyamine(s) (B)(iii)(a) comprise the polyalkylene polyamine(s), as defined and identified herein. Accordingly, aliphatic alkylene amide(s) or imide(s) obtainable by reaction of a polyalkylene polyamine and (B)(iii)(c) are preferred to aliphatic alkylene amide(s) or imide(s) obtainable by reaction of an alkyl polyamine and (B)(iii)(c).

Suitably, in each and every aspect of the invention, when additive (B)(iii) comprises an aliphatic acid amide, the aliphatic (C9 to C29)hydrocarbyl-substituted monocarboxylic acid or derivative thereof (B)(iii)(b), as defined and identified herein, which may be reacted with the aliphatic alkylene polyamine (B)(iii)(a), as defined and identified herein, to form additive (B)(iii), comprises an aliphatic (C11 to C23)hydrocarbyl-substituted monocarboxylic acid, preferably an aliphatic (C15 to C20)hydrocarbyl-substituted monocarboxylic acid, even more preferably an aliphatic (C17)hydrocarbyl-substituted monocarboxylic acid, or derivative thereof.

Suitably, the hydrocarbyl substituent group of said aliphatic (C9 to C29)hydrocarbyl-substituted monocarboxylic acid(s) or derivative thereof (B)(iii)(b) comprises an alkyl or alkenyl group, especially an acyclic alkyl group or acyclic alkenyl group. Highly preferred aliphatic (C9 to C29)hydrocarbyl-substituted monocarboxylic acid(s) or derivative(s) thereof (B)(iii)(b) comprise (C17)alkyl-substituted monocarboxylic acids and (C17)alkenyl-substituted monocarboxylic acids, and derivatives thereof, and structural isomers and stereoisomers thereof.

Suitably the carboxyl group of the aliphatic (C9 to C29)hydrocarbyl-substituted monocarboxylic acid or derivative thereof is attached to the C-1 position of the aliphatic (C9 to C29)hydrocarbyl-substituent group.

Suitably, highly preferred aliphatic (C9 to C29)hydrocarbyl-substituted monocarboxylic acids or derivatives thereof (B)(iii)(b) comprise octadecanoic acid, octadecenoic acid and structural isomers thereof, particularly stearic acid, isostearic acid, oleic acid (octadec-9-enoic acid), especially isostearic acid and oleic acid.

Suitably, preferred aliphatic acid amide additive(s) which (B)(iii) may represent is obtainable by reaction of a polyethylene polyamine (B)(iii)(a), as defined and identified herein, and (B)(iii)(b) a (C9 to C29)alkyl-substituted monocarboxylic acid or derivative thereof or (C9 to C29)alkenyl-substituted monocarboxylic acid or derivative thereof. More preferred acid amide additive(s) (B)(iii), as defined and identified herein, is obtainable by reaction of a polyethylene polyamine (B)(iii)(a) having from 4 to 12 total carbon atoms and from 3 to 8, such as 3 to 6, total amine groups, as defined and identified herein, and (B)(iii)(b) a (C9 to C29)alkyl-substituted monocarboxylic acid or derivative thereof or (C9 to C29)alkenyl-substituted monocarboxylic acid or derivative thereof, as defined and identified herein, preferably (C11 to C23)alkyl-substituted monocarboxylic acid(s) and (C11 to C23)alkenyl-substituted monocarboxylic acid(s), especially (C17)alkyl-substituted monocarboxylic acid(s) and (C17)alkenyl-substituted monocarboxylic acid(s), or derivatives thereof. Suitably, highly preferred polyethylene polyamine(s) having from 4 to 12 total carbon atoms and from 3 to 8 total amine groups comprise diethylene triamine, triethylene tetramine, tetraethylene pentaamine, pentaethylene hexamine, and mixtures thereof.

Suitably, alternative aliphatic acid amide additive(s) which (B)(iii) may represent is obtainable by reaction of an alkyl polyamine (B)(iii)(a), as defined and identified herein, and (B)(iii)(b) a (C9 to C29)alkyl-substituted monocarboxylic acid or derivative thereof or (C9 to C29)alkenyl-substituted monocarboxylic acid or derivative thereof. More preferred acid amide additive(s) (B)(iii), as defined and identified herein, is obtainable by reaction of an alkyl polyamine (B)(iii)(a) having from 3 to 12 total carbon atoms and from 2 to 8, such as 2 to 6, total amine groups, as defined and identified herein, and (B)(iii)(b) a (C9 to C29)alkylsubstituted monocarboxylic acid or derivative thereof or (C9 to C29)alkenyl-substituted monocarboxylic acid or derivative thereof, as defined and identified herein, preferably (C11 to C23)alkyl-substituted monocarboxylic acid(s) and (C11 to C23)alkenyl-substituted monocarboxylic acid(s), especially (C17)alkyl-substituted monocarboxylic acid(s) and (C17)alkenyl-substituted monocarboxylic acid(s), or derivatives thereof. Suitably, preferred alkyl polyamine(s) (B)(iii)(a) having from 3 to 12 total carbon atoms and from 2 to 8 total amine groups comprise diaminopropane, diaminobutane, diaminopentane, dimethylamino-3-aminopropane, especially dimethylamino-3-aminopropane.

Suitably, in each and every aspect of the invention, when additive (B)(iii) comprises an aliphatic acid imide, (B)(iii)(c) comprises an aliphatic hydrocarbyl-substituted anhydride, aliphatic hydrocarbyl-substituted di-acid or aliphatic hydrocarbyl-substituted diol, as defined or identified herein, which may be reacted with the aliphatic alkylene polyamine (B)(iii)(a), as defined and identified herein, to form additive (B)(iii). Suitably, (B)(iii)(c) is selected from a poly(C2 to C6)alkenyl-substituted anhydride, a poly(C2 to C6)alkenyl-substituted di-acid, an aliphatic (C₁₀ to C₃₀)hydrocarbyl-substituted anhydride, an aliphatic (C₁₀ to C₃₀)hydrocarbyl-substituted diacid, or an aliphatic (C₁₀ to C₃₀)hydrocarbyl-substituted diol, each as further defined and identified herein.

Suitably, when additive (B)(iii) comprises an aliphatic acid imide, in a preferred embodiment (B)(iii)(c) is selected from a poly(C2 to C6)alkenyl-substituted anhydride or a poly(C2 to C6)alkenyl-substituted di-acid, each as further defined and identified herein. Preferred, poly(C2 to C6)alkenyl-substituted anhydride(s) and poly(C2 to C6)alkenyl-substituted di-acid(s), which (B)(iii)(c) may represent, include additive (B)(ii), as defined and identified herein. Accordingly, highly preferred poly(C2 to C6)alkenyl-substituted anhydride(s) and poly(C2 to C6)alkenyl-substituted di-acid(s), which (B)(iii)(c) may represent, comprise polyisobutenyl succinic anhydride(s) or polyisobutenyl succinic acid(s) having a Mn of from 400 to 3000, preferably 400 to 1250, more preferably less than 900 daltons, especially polyisobutenyl succinic anhydride(s) having a Mn of from 400 to 3000 daltons.

Suitably, in an embodiment, preferred aliphatic acid imide additive(s) which (B)(iii) may represent is obtainable by reaction of a polyethylene polyamine (B)(iii)(a), as defined and identified herein, and (B)(iii)(c) a poly(C2 to C6)alkenyl-substituted anhydride(s) and poly(C2 to C6)alkenyl-substituted di-acid(s), as defined and identified herein. Suitably, more preferred aliphatic acid imide additive(s) (B)(iii) is obtainable by reaction of a polyethylene polyamine (B)(iii)(a) having from 4 to 12 total carbon atoms and from 3 to 8, such as 3 to 6, total amine groups, and (B)(iii)(c) a polyisobutenyl succinic anhydride(s) or polyisobutenyl succinic acid(s), particularly a polyisobutenyl succinic anhydride(s) or polyisobutenyl succinic acid(s) having a Mn of from 400 to 3000 daltons, especially polyisobutenyl succinic anhydride(s) having a Mn of from 400 to 3000, such as 400 to 1250, such as less than 900 daltons. Suitably, highly preferred polyethylene polyamine(s) having from 4 to 12 total carbon atoms and from 3 to 8 total amine groups comprise diethylene triamine, triethylene tetramine, tetraethylene pentaamine, pentaethylene hexamine, and mixtures thereof.

Suitably, in an alternative embodiment, aliphatic acid imide additive(s) which (B)(iii) may represent is obtainable by reaction of an alkyl polyamine (B)(iii)(a), as defined and identified herein, and (B)(iii)(c) a poly(C2 to C6)alkenyl-substituted anhydride(s) and poly(C2 to C6)alkenyl-substituted di-acid(s), as defined and identified herein. Suitably, more preferred aliphatic acid imide additive(s) (B)(iii) is obtainable by reaction of an alkyl polyamine (B)(iii)(a) having from 3 to 12 total carbon atoms and from 2 to 8, such as 2 to 6, total amine groups, as defined and identified herein, and (B)(iii)(c) a polyisobutenyl succinic anhydride(s) or polyisobutenyl succinic acid(s), particularly a polyisobutenyl succinic anhydride(s) or polyisobutenyl succinic acid(s) having a Mn of from 400 to 3000 daltons, especially polyisobutenyl succinic anhydride(s) having a Mn of from 400 to 3000 daltons. Suitably, preferred alkyl polyamine(s) (B)(iii)(a) having from 3 to 12 total carbon atoms and from 2 to 8 total amine groups comprise diaminopropane, diaminobutane, diaminopentane, dimethylamino-3-aminopropane, especially dimethylamino-3-aminopropane.

Suitably, in an alternative preferred embodiment when additive (B)(iii) comprises an aliphatic acid imide, (B)(iii)(c) is selected from an aliphatic (C₁₀ to C₃₀)hydrocarbyl-substituted acid anhydride, an aliphatic (C₁₀ to C₃₀)hydrocarbyl-substituted diacid, or an aliphatic (C₁₀ to C₃₀)hydrocarbyl-substituted diol, each as further defined and identified herein. Suitably, (B)(iii)(c) comprises an aliphatic (C₁₀ to C₃₀)hydrocarbyl-substituted succinic anhydride, an aliphatic (C₁₀ to C₃₀)hydrocarbyl-substituted succinic acid, or an aliphatic (C₁₀ to C₃₀)hydrocarbyl-substituted 1,4-diol, each as further defined and identified herein. Suitably, the aliphatic (C₁₀ to C₃₀)hydrocarbyl group substituent(s) of said succinic anhydride, said succinic acid or said 1,4-diol (B)(iii)(c) comprises aliphatic (C12 to C24) hydrocarbyl group(s), even more preferably aliphatic (C16 to C20) hydrocarbyl group(s), such as aliphatic (C18) hydrocarbyl group(s). Suitably, preferred hydrocarbyl substituent group(s) of said aliphatic (C₁₀ to C₃₀)hydrocarbyl-substituted acid anhydride, aliphatic (C₁₀ to C₃₀)hydrocarbyl-substituted diacid, or aliphatic (C₁₀ to C₃₀)hydrocarbyl-substituted diol (B)(iii)(c), as defined and identified herein, include alkyl and/or alkenyl groups, more preferably acyclic alkyl and/or acyclic alkenyl groups.

The aliphatic (C₁₀ to C₃₀)hydrocarbyl-substituted acid anhydride(s), as defined and identified herein, which (B)(iii)(c) may represent are preferred.

Suitably, alternative preferred aliphatic acid imide additive(s) which (B)(iii) may represent is obtainable from reaction of a polyethylene polyamine (B)(iii)(a), as defined and identified herein, and (B)(iii)(c) a (C₁₀ to C₃₀)alkyl-substituted succinic anhydride(s) and (C₁₀ to C₃₀)alkenyl-substituted succinic anhydride(s), as defined and identified herein. Suitably, more preferred aliphatic acid imide additive(s) (B)(iii) is obtainable by reaction of a polyethylene polyamine (B)(iii)(a) having from 4 to 12 total carbon atoms and from 3 to 8, such as 3 to 6, total amine groups, and (B)(iii)(c) a (C₁₀ to C₃₀)alkyl-substituted succinic anhydride(s) and (C₁₀ to C₃₀)alkenyl-substituted succinic anhydride(s), as defined and identified herein, preferably (C₁₆ to C₂₀)alkyl-substituted succinic anhydride(s) and (C₁₆ to C₂₀)alkenyl-substituted succinic anhydride(s), especially (C₁₈)alkyl-substituted succinic anhydride(s) and (C₁₈)alkenyl-substituted succinic anhydride(s). Suitably, highly preferred polyethylene polyamine(s) having from 4 to 12 total carbon atoms and from 3 to 8 total amine groups comprise diethylene triamine, triethylene tetramine, tetraethylene pentaamine, pentaethylene hexamine, and mixtures thereof, especially tetraethylene pentamine.

Suitably, alternative aliphatic acid imide additive(s) which (B)(iii) may represent is obtainable from reaction of an alkyl polyamine (B)(iii)(a), as defined and identified herein, and (B)(iii)(c) a (C₁₀ to C₃₀)alkyl-substituted succinic anhydride(s) and (C₁₀ to C₃₀)alkenyl-substituted succinic anhydride(s), as defined and identified herein. Suitably, more preferred aliphatic acid imide additive(s) (B)(iii) is obtainable by reaction of an alkyl polyamine (B)(iii)(a) having from 3 to 12 total carbon atoms and from 2 to 8, such as 2 to 6, total amine groups, as defined and identified herein, and (B)(iii)(c) a (C₁₀ to C₃₀)alkyl-substituted succinic anhydride(s) and (C₁₀ to C₃₀)alkenyl-substituted succinic anhydride(s), as defined and identified herein, preferably (C₁₆ to C₂₀)alkyl-substituted succinic anhydride(s) and (C₁₆ to C₂₀)alkenyl-substituted succinic anhydride(s), especially (C₁₈)alkyl-substituted succinic anhydride(s) and (C18)alkenyl-substituted succinic anhydride(s). Suitably, preferred alkyl polyamine(s) (B)(iii)(a) having from 3 to 12 total carbon atoms and from 2 to 8 total amine groups comprise diaminopropane, diaminobutane, diaminopentane, dimethylamino-3-aminopropane, especially dimethylamino-3-aminopropane.

Suitably, in each and every aspect of the invention, (B)(iii) the aliphatic hydrocarbyl acid amide or aliphatic hydrocarbyl acid imide, as defined or identified herein, is present in an amount of greater than or equal to 5, such as greater than or equal to 10, such as greater than or equal to 15, such as greater than or equal to 20, such as greater than or equal to 25, ppm based on the total mass of crude oil.

Suitably, in each and every aspect of the invention, (B)(iii) the aliphatic hydrocarbyl acid amide or aliphatic hydrocarbyl acid imide, as defined or identified herein, is present in an amount of less than or equal to 5000, such as less than or equal to 3000, such as less than or equal to 1000, such as less than or equal to 750, such as less than or equal to 500, such as less than or equal to 250, ppm based on the total mass of crude oil.

A preferred three-way combination of additives (B)(i), (B)(ii) and (B)(iii), in each and every aspect of the invention, comprises or is made by admixing:
(B)(i) a calcium (C₁₀ to C₄₀)hydrocarbyl-substituted salicylate detergent, as defined and identified herein, having a total base number (TBN) at 100% active mass of less than or equal to 135, such as less than or equal to 100, such as less than or equal to 75, mg KOH/g as measured by ASTM D2896;
(B)(ii) a polyisobutenyl succinic anhydride or polyisobutenyl succinic acid having a Mn of from 400 to 3000 daltons, as defined and identified herein; and
(B)(iii) an aliphatic hydrocarbyl acid amide, as defined and identified herein, or an aliphatic hydrocarbyl acid imide as defined and identified herein, or a combination thereof, wherein:
   (i) said aliphatic hydrocarbyl acid amide is obtainable by reacting (B)(iii)(b) a (C₉ to C₂₉)alkyl-substituted monocarboxylic acid or derivative thereof or (C₉ to C₂₉)alkenyl-substituted monocarboxylic acid or derivative thereof, as defined and identified herein, and (B)(iii)(a) an aliphatic alkylene polyamine; and
   (ii) said aliphatic hydrocarbyl imide is obtainable by reacting (B)(iii)(c) a poly(C₂ to C₆)alkenyl-substituted succinic anhydride(s) and poly(C₂ to C₆)alkenyl-substituted succinic acid(s), as defined and identified herein, and (B)(iii)(a) an aliphatic alkylene polyamine; or,
   (iii) said aliphatic hydrocarbyl imide is obtainable by reacting (B)(iiii)(c) a (C₁₀ to C₃₀)alkyl-substituted succinic anhydride(s) and (C₁₀ to C₃₀)alkenyl-substituted succinic anhydride(s), as defined and identified herein, and (B)(iii)(a) an aliphatic alkylene polyamine; and wherein (B)(iii)(a) the aliphatic alkylene polyamine comprises a polyethylene polyamine having from 4 to 12 total carbon atoms and from 3 to 8, such as 3 to 6, total amine groups, as defined and identified herein.

A highly preferred three-way combination of additives (B)(i), (B)(ii) and (B)(iii), in each and every aspect of the invention, comprises or is made by admixing:
(B)(i) a calcium (C₁₀ to C₄₀)hydrocarbyl-substituted salicylate detergent having a total base number (TBN) at 100% active mass of less than or equal to 135, preferably less than or equal to 100, such as less than or equal to 75, mg KOH/g as measured by ASTM D2896;
(B)(ii) a polyisobutenyl succinic anhydride or polyisobutenyl succinic acid having a Mn of from 400 to 3000 daltons, as defined and identified herein; and
(B)(iii) an aliphatic hydrocarbyl acid amide which is obtainable by reacting (B)(iii)(b) a (C₁₇)alkyl-substituted monocarboxylic acid or derivative thereof or (C₁₇)alkenyl-substituted monocarboxylic acid or derivative thereof, as defined and identified herein, and (B)(iii)(a) a polyethylene polyamine having from 4 to 12 total carbon atoms and from 3 to 8, such as 3 to 6, total amine groups, as defined and identified herein.

An alternative highly preferred three-way combination of additives (B)(i), (B)(ii) and (B)(iii), in each and every aspect of the invention, comprises or is made by admixing:
(B)(i) a calcium (C₁₀ to C₄₀)hydrocarbyl-substituted salicylate detergent having a total base number (TBN) at 100% active mass of less than or equal to 135, such as less than or equal to 100, such as less than or equal to 75, mg KOH/g as measured by ASTM D2896;
(B)(ii) a polyisobutenyl succinic anhydride or polyisobutenyl succinic acid having a Mn of from 400 to 3000 daltons, as defined and identified herein; and
(B)(iii) an aliphatic hydrocarbyl imide which is obtainable by reacting (B)(iii)(c) a polyisobutenyl succinic anhydride(s) or polyisobutenyl succinic acid(s), as defined and identified herein, and (B)(iii)(a) a polyethylene polyamine having from 4 to 12 total carbon atoms and from 3 to 8, such as 3 to 6, total nitrogen atoms, as defined and identified herein.

A further alternative highly preferred three-way combination of additives (B)(i), (B)(ii) and (B)(iii), in each and every aspect of the invention, comprises or is made by admixing:
(B)(i) a calcium (C₁₀ to C₄₀)hydrocarbyl-substituted salicylate detergent having a total base number (TBN) at 100% active mass of less than or equal to 135, such as less than or equal to 100, such as less than or equal to 75, mg KOH/g as measured by ASTM D2896;
(B)(ii) a polyisobutenyl succinic anhydride or polyisobutenyl succinic acid having a Mn of from 400 to 3000 daltons, as defined and identified herein; and
(B)(iii) an aliphatic hydrocarbyl imide which is obtainable by reacting (B)(iii)(c) a (C₁₆ to C₂₀)alkyl-substituted succinic anhydride(s) and (C₁₆ to C₂₀)alkenyl-substituted succinic anhydride(s), especially (C₁₈)alkyl-substituted succinic anhydride(s) and (C₁₈)alkenyl-substituted succinic anhydride(s), and (B)(iii)(a) a polyethylene polyamine having from 4 to 12 total carbon atoms and from 3 to 8, such as 3 to 6, total nitrogen atoms, as defined and identified herein.

A most preferred three-way combination of additives (B)(i), (B)(ii) and (B)(iii), in each and every aspect of the invention, comprises or is made by admixing:
(B)(i) a calcium (C₁₀ to C₄₀)hydrocarbyl-substituted salicylate detergent having a total base number (TBN) at 100% active mass of less than or equal to 135, such as less than or equal to 125, such as less than or equal to 75, mg KOH/g as measured by ASTM D2896;
(B)(ii) a polyisobutenyl succinic anhydride or polyisobutenyl succinic acid having a Mn of from 400 to 3000 daltons, as defined and identified herein; and
(B)(iii) an aliphatic hydrocarbyl acid amide which is obtainable by reacting (B)(iii)(b) isostearic acid or derivative thereof and (B)(iii)(a) a polyethylene polyamine having from 4 to 12 total carbon atoms and from 3 to 8, such as 3 to 6, total amine groups, as defined and identified herein, especially tetraethylene pentaamine.

The crude oil of each aspect of the invention has an asphaltene content. Suitably, the crude oil includes asphaltene(s) present in amount of greater than or equal to 0.1, such as greater than or equal to 0.2, such as greater than or equal to 0.3, such as greater than or equal to 0.5, such as greater than or equal to 1, such as greater than or equal to 2, mass %, based on the total mass of the crude oil. Suitably, the crude oil includes asphaltene(s) present in amount of less than or equal to 30, such as less than or equal to 25, such as less than or equal to 20, such as less than or equal to 18, such as greater than or equal to 15, such as less than or equal to 10, mass %, based on the total mass of the crude oil.

The three-way combination of additives may be introduced into a crude oil by techniques well known to those skilled in the art, for example, the combination of additive(s) may be blended into a crude oil, the additive(s) may be introduced into flowlines transporting a crude oil, the additive(s) may be injected into a crude oil, for example, into a crude oil reservoir via the wellbore.

Suitably, the three-way combination of additives (B)(i), (B)(ii) and (B)(iii) may be added to a crude oil at one or more crude oil transportation and/or processing stages before the crude oil arrives at a petroleum refinery, for example:; (i) to a crude oil during the storage of the crude oil, for example, to a crude oil being stored in storage tanks, which tanks may be located at the wellbore region, or at intermediate locations between the wellbore region and petroleum refinery; (ii) to a crude oil during the transportation of that crude oil, for example, to a crude oil being transported by pipe, ship, rail, oil tanker, especially to a crude oil being transported from the wellbore region to a petroleum refinery along a pipeline; (iii) to a crude oil before or during the processing of a crude oil before it arrives at a petroleum refinery, for example, to a crude oil being blended with a different type of crude oil, and/or hydrocarbon fluid, to form a crude oil blend.

Suitably, in each aspect of the invention, the crude oil is at ambient temperature (i.e., at a temperature of its immediate surroundings and without application of heat from an additional external heat source). Crude oil in a crude oil reservoir may be at temperature of up to 150 °C. The transportation, storage and processing of crude oil before the crude oil is refined at a petroleum refinery is dependent upon geographical location. Suitably, in each aspect of the invention, the crude oil may be at a temperature of less than 40, such as less than or equal to 35, °C.

### Definitions

In this specification, the following words and expressions, if and when used, shall have the meanings ascribed below:
"Active ingredients" or "(a.i.)" refers to additive material that is not diluent or solvent;
"Comprising" or any cognate word specifies the presence of stated features, steps, or integers or components, but does not preclude the presence or addition of one or more other features, steps, integers, components or groups thereof. The expressions "consists of" or "consists essentially of" or cognates may be embraced within "comprises" or any cognate word. The expression "consists essentially of" permits inclusion of substances not materially affecting the characteristics of the composition to which it applies. The expression "consists of" or cognates means only the stated features, steps, integers components or groups thereof are present to which the expression refers;
"Ashless" in relation to an additive means the additive does not include a metal;
"Ash-containing" in relation to an additive means the additive includes a metal;
"Crude oil" means the hydrocarbon fossil fuel oil which is located in and extracted from an underground reservoir. The crude oil may then be subsequently refined in a petroleum refinery operation at a petroleum refinery to yield various fractions which do not constitute a crude oil. The term "crude oil" embraces a single type of crude oil, a crude oil blend comprising two or more different types of crude oil, and crude oil which has been blended with a hydrocarbon fluid. Crude oil embraces intermediate (light) crude oils, medium crude oils, heavy crude oils and shale oils;
"Crude oil having an asphaltene content" means a crude oil, as defined herein, which includes asphaltenes;
"Hydrocarbon fluid" means a hydrocarbon liquid or oil which is not a crude oil;
"Crude oil refinery operation" means any process which is, or can be, employed in refining a crude oil, such as any process employed in an oil refinery operation. A crude oil refinery operation embraces any process which is, or can be, employed in refining a crude oil, crude oil blends comprising two or more different types of crude oils and the further refining of fractions obtained from refining crude oil and crude oil blends. Crude oil refinery operations involve separating and isolating component parts (i.e., different fractions) from a crude oil. This is typically achieved by heating, distilling and cracking the crude oil;
"petroleum refinery operation" means any process which is, or can be, employed in refining a petroleum feedstock which petroleum feedstock includes a crude oil;
"Hydrocarbyl group" means a univalent radical that contains hydrogen and carbon atoms only and it is bonded to the remainder of the compound directly via a single carbon atom. The term "hydrocarbyl group" includes "alkyl", "alkenyl" and "allyl" groups. Preferably, the hydrocarbyl group is an aliphatic hydrocarbyl group, more preferably an aliphatic acyclic hydrocarbyl group, such as an aliphatic acylic alkyl or acyclic alkenyl group. The hydrocarbyl group, as defined herein, may be straight or branched chain;
"Alkyl group" means a univalent alkyl radical (i.e., a monovalent hydrocarbyl group containing no double or triple bonds) which is bonded to the remainder of the compound directly via a single carbon atom. The alkyl group may be a straight-chain or a branched-chain. Preferred alkyl group(s) are acyclic alkyl group(s);
"Alkene group" means a univalent alkene radical (i.e., a monovalent hydrocarbyl group containing one or more carbon to carbon double bonds) which is bonded to the remainder of the compound directly via a single carbon atom. The alkene group may be a straight-chain or a branched-chain. Preferred alkene group(s) are acyclic alkene group(s);
"Alkylene" is synonymous with "alkanediyl" and means a bivalent saturated hydrocarbon radical derived from an alkane by removal of a hydrogen atom from two different carbon atoms (i.e., a divalent hydrocarbon radical containing no double or triple bonds); it may be linear or branched-chain;
"Polyalkylene" is synonymous with "polyalkene" and means a polymer containing the appropriate alkanediyl repeating radical. Such polymers may be formed by polymerization of the appropriate alkene. For example, polybutylene also known as polybutene may be formed by polymerizing but-1-ene, but-2-ene and/or 2-methyl propene, and polypropylene also known as polypropene may be formed by polymerizing propene;
"Polyalkylenyl" or "polyalkenyl" group means a univalent polymer substituent group containing the appropriate alkanediyl repeating radical which is bonded to the rest of the compound via a single carbon atom. Suitably, a polyalkenyl group may be formed from the corresponding polyalkene;
Reference to a group or compound being a particular polymer (e.g., polypropenyl group, polybutenyl group, polybutene, polypropene) encompasses polymers that preferably consist of the respective alkanediyl repeating radical, but also less preferably those which contain primarily the respective alkanediyl repeating radical along with negligible amounts of other substitutions and/or interruptions along the polymer chain. For example, reference to a group being a polybutenyl group in its broadest aspect does not require that the group consist of 100% butanediyl repeating radicals without, for example, any linking groups, substitutions, or impurities. Such impurities or other substituents may be present in relatively minor amounts provided they do not materially affect the performance of the additive compared with the same additive containing the respective alkanediyl repeating radical at 100% purity;
"Alkene" is synonymous with "alkylene" and means a hydrocarbon compound which includes one or more carbon to carbon double bonds, such as propylene or propene, prop-1-ene, butylene or butene, and but-1-ene;
"polyamine" means a hydrocarbon compound having at least two amine groups wherein each of said at least two amine groups are bonded to a different carbon atom of the hydrocarbon compound. Accordingly, a polyamine includes at least 2 carbon atoms. Preferably, a "polyamine" includes at least 3 amine groups;
"alkylene polyamine" means a polyamine as defined herein having at least two amine groups, wherein each of said at least two amine groups are bonded to a different carbon atom of an "alkanediyl" radical. Suitably, the term "alkylene polyamine" embraces "alkyl polyamine" and "polyalkylene polyamine";
"alkyl polyamine" means an alkane which is terminated with at least one primary amine group and further terminated and/or substituted with one or more further amine groups;
"polyalkylene polyamine" means an alkylene polyamine having at least 3 amine groups and two or more alkanediyl radical repeating units, wherein the said first amine group is bonded to the second amine group by a first alkanediyl radical, and the second amine group is bonded to the third amine group by a second alkanediyl radical. Accordingly, the polyalkylene polyamine includes at least one primary amine group and at least one secondary amine group;
"halo" or "halogen" includes fluoro, chloro, bromo and iodo;
"oil-soluble" or "oil-dispersible", or cognate terms, used herein do not necessarily indicate that the compounds or additives are soluble, dissolvable, miscible, or are capable of being suspended in a crude oil in all proportions. These do mean, however, that the three-way combination of additives (B)(i), (B)(ii) and (B)(iii) are, for example, soluble or stably dispersible in a crude oil to an extent sufficient to exert their intended effect. Moreover, the additional incorporation of other additives may also permit incorporation of higher levels of a particular additive(s), if desired;
"major amount" means in 50 mass % or more, preferably 60 mass % or more, more preferably 70 mass % or more, even more preferably 80 mass % or more, of a composition, such as 50 to 99.999 mass%, such as 60 to 99.995 mass%;
"minor amount" means less than 50 mass %, preferably less than or equal to 40 mass %, more preferably less than or equal to 30 mass %, even more preferably less than or equal to 20 mass %, of a composition, such as from 0.001 to 50 mass %, such as from 0.005 to 40 mass % such as from 0.007 to 30 mass %, such as from 0.01 to 20 mass%;
"effective minor amount" in respect of the three-way combination of additives, means a minor amount of such additive(s) in a crude oil that is effective to inhibit asphaltene precipitation from the crude oil;
"obtainable by" or "obtainable from" in respect of a compound means that the title compound may be obtained by or from reaction of the specified reactants but does not exclude obtaining the title compound by an alternative synthetic route;
"ppm" means parts per million by mass, based on the total mass of the composition;
"TBN" in relation to an additive component or of a composition, means total base number (mg KOH/g) as measured by ASTM D2896;
"KV100" means kinematic viscosity at 100oC as measured by ASTM D445;
Mn means number average molecular weight. Mn of the poly(alkene) which may be used to synthesise Additive (B)(ii) and starting material (B)(iii)(c) may be determined by known routine techniques, such as gel permeation chromatography and/or by gas chromatography (GC) using a flame ionization detector (FID) and simulated distillation in accordance with ASTM D2887;
Mw means weight average molecular weight. Mw of the poly(alkene) which may be used to synthesise Additive (B)(ii) and starting material (B)(iii)(c) may be determined by known routine techniques, such as gas chromatography (GC) and simulated distillation in accordance with ASTM D2887; and
"Polydispersity index" of a polymeric entity means Mw/Mn of the polymeric entity and represents an index of the breadth of molecular weight distribution.

All percentages reported are mass % on an active ingredient basis, i.e., without regard to carrier or diluent oil, unless otherwise stated.

Also, it will be understood that various components used, essential as well as optimal and customary, may react under conditions of formulation, storage or use and that the invention also provides the product obtainable or obtained as a result of any such reaction.

Further, it is understood that any upper and lower quantity, range and ratio limits set forth herein may be independently combined. Accordingly, any upper and lower quantity, range and ratio limits set forth herein associated with a particular technical feature of the present invention may be independently combined with any upper and lower quantity, range and ratio limits set forth herein associated with one or more other particular technical feature(s) of the present invention. Furthermore, any particular technical feature of the present invention, and all preferred variants thereof, may be independently combined with any other particular technical feature(s), and all preferred variants thereof, irrespective of whether such features are presented as preferred or not.

Also, it will be understood that the preferred features of each aspect of the present invention are regarded as preferred features of every other aspect of the present invention.

### DETAILED DESCRIPTION OF THE INVENTION

### ADDITIVE B(i) - Metal Hydroxybenzoate Detergent

Additive B(i) is a metal hydrocarbyl-substituted hydroxybenzoate detergent, wherein the metal of said detergent has a valency of +1 or +2 and wherein said metal hydrocarbyl-substituted hydroxybenzoate detergent has a total base number (TBN) at 100% active mass of less than or equal to 135 mg KOH/g as measured by ASTM D2896. Suitably, the metal hydrocarbyl-substituted hydroxybenzoate detergent is oil-soluble or oil-dispersible.

A metal detergent is an additive based on so-called metal "soaps", that is metal salts of acidic organic compounds, sometimes referred to as surfactants, which generally comprise a polar head with a long hydrophobic tail. The surfactant of additive (B)(i) is a hydrocarbyl-substituted hydroxybenzoic acid. The metal of additive (B)(i) is a metal having a valency of +1 or +2.

Preferably, the metal hydrocarbyl-substituted hydroxybenzoate detergent is a metal (C₁₀ to C₄₀)hydrocarbyl-substituted hydroxybenzoate detergent, more preferably a metal (C₁₀ to C₄₀)hydrocarbyl-substituted salicylate detergent.

The one or more metal C₁₀ to C₄₀ hydrocarbyl substituted hydroxybenzoates typically comprise one or more compounds of Formula I: 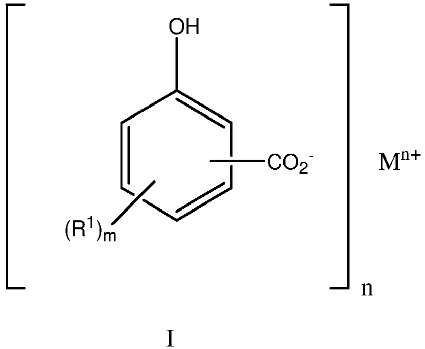 wherein R¹ represents a (C₁₀ to C₄₀)hydrocarbyl group that is predominantly aliphatic in nature having 10 to 40 carbon atoms, M is a metal, n is an integer of 1 or 2 depending on the valence of the metal, and m is an integer of 1 to 3.

The more preferred one or more metal (C₁₀ to C₄₀)hydrocarbyl-substituted salicylates typically comprise one or more compounds of Formula II: 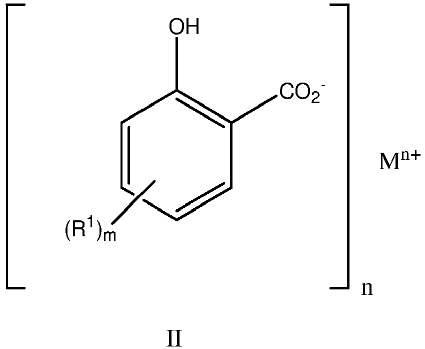 wherein R¹, M, n and m are as defined for a compound of formula I.

For the avoidance of doubt, the preferred features of the C₁₀ to C₄₀ hydrocarbyl substituted hydroxybenzoates also represent preferred features of the C₁₀ to C₄₀ hydrocarbyl substituted salicylates and vice versa.

Preferably, the metal of said metal hydrocarbyl-substituted hydroxybenzoate detergent which has a valency of +1 or +2 (*i.e.,* M in a compound of formula I and formula II) is selected from: an alkali metal, such as lithium, sodium or potassium; an alkaline earth metal, such as magnesium, calcium barium or strontium; or, a metal such as zinc. More preferably, the metal of said metal hydrocarbyl-substituted hydroxybenzoate detergent is an alkaline earth metal, such as magnesium or calcium, especially calcium. Accordingly a highly preferred metal hydrocarbyl-substituted hydroxybenzoate detergent comprises a calcium hydrocarbyl-substituted salicylate detergent, especially a calcium (C₁₀ to C₄₀)hydrocarbyl-substituted salicylate detergent, *i.e.,* a compound of formula II where M represents calcium.

Preferably, the hydrocarbyl group of said metal hydrocarbyl-substituted hydroxybenzoate detergent consists solely of carbon and hydrogen atoms. The hydrocarbyl group is predominantly aliphatic in nature and it is preferably purely aliphatic. Purely aliphatic hydrocarbyl groups include linear or branched aliphatic groups, for example linear or branched alkyl or alkenyl groups. Most preferably, the hydrocarbyl group represents a linear (*i.e.,* straight chain) or branched alkyl group.

Examples of C₁₀ to C₄₀ alkyl groups (which may be linear or branched) include decyl, undecyl, dodecyl, tridecyl, tetradecyl, pentadecyl, hexadecyl, heptadecyl, octadecyl, nonadecyl, eicosyl, heneicosyl, dococyl, tricocyl, tetracocyl, pentacocyl, hexacocyl, heptacocyl, octacocyl, nonacocyl, and triacontyl. Examples of C₁₀ to C₄₀ alkenyl groups (which may be linear or branched, the position of the double bond being arbitrary) include decenyl, undecenyl, dodecenyl, tridecenyl, tetradecenyl, pentadecenyl, hexadecenyl, heptadecenyl, octadecenyl, nonadecenyl, eicosenyl, heneicosenyl, dococenyl, tricocenyl, tetracocenyl, pentacocenyl, hexacocenyl, heptacocenyl, octacocenyl, nonacocenyl, and triacontenyl.

Preferably, the metal (C₁₀ to C₄₀)hydrocarbyl-substituted hydroxybenzoate detergent (which includes the preferred (C₁₀ to C₄₀)hydrocarbyl-substituted salicylate detergents), as defined herein, comprises a metal (C₁₀ to C₃₀)hydrocarbyl-substituted hydroxybenzoate detergent, more preferably a metal (C₁₀ to C₂₀)hydrocarbyl-substituted hydroxybenzoate detergent, even more preferably a metal (C₁₆ to C₁₈)hydrocarbyl-substituted hydroxybenzoate detergent. As stated herein, the preferred (C₁₀ to C₄₀)hydrocarbyl substituent groups comprise (C₁₀ to C₄₀)alkyl substituent groups, as defined herein, which alkyl groups may be linear or branched.

The basicity of a detergent is typically expressed as a total base number (TBN). A total base number is the amount of acid needed to neutralise all the basicity of the material. The TBN may be measured using ASTM standard D2896.

An essential feature of the metal hydrocarbyl-substituted hydroxybenzoate detergent is that it has a total base number (TBN) at 100% active mass of less than or equal to 135 mg KOH/g as measured by ASTM D2896. Preferably, the metal hydrocarbyl-substituted hydroxybenzoate detergent has a total base number (TBN) at 100% active mass of less than or equal to 125, more preferably less than or equal to 100, more preferably less than or equal to 75, even more preferably less than or equal to 70, mg KOH/g as measured by ASTM D2896.

Suitably, the metal hydrocarbyl-substituted hydroxybenzoate detergent has a total base number (TBN) at 100% active mass of greater than or equal to 20, preferably greater than or equal to 30, more preferably greater than or equal to 40, more preferably greater than or equal to 50, even more preferably greater than or equal to 60, mg KOH/g as measured by ASTM D2896.

Suitably, the metal hydrocarbyl-substituted hydroxybenzoate detergent may consist essentially of a single metal hydrocarbyl-substituted hydroxybenzoate detergent. Alternatively, the metal hydrocarbyl-substituted hydroxybenzoate detergent may comprise a mixture of one or more different metal hydrocarbyl-substituted hydroxybenzoate detergents. Suitably, it will be appreciated that when a mixture of one or more different metal hydrocarbyl-substituted hydroxybenzoate detergents is used, then the resulting total base number of the mixture of detergents is as defined and identified herein.

Metal detergents may be overbased, low-based or neutral. The term "overbased" is generally used to describe metal detergents in which the ratio of the number of equivalents of the metal moiety to the number of equivalents of the acid moiety is substantially greater than one. Suitably, the term "neutral" is generally used to describe metal detergents in which the ratio of the number of equivalents of the metal moiety to the number of equivalents of the acid moiety is essentially equal to one (*e*.*g*., up to 1.2, such as up to 1.1). The term "low based" is typically used to describe metal detergents in which the equivalent ratio of metal moiety to acid moiety is greater than 1 and up to about 2. Preferably, the metal hydrocarbyl-substituted hydroxybenzoate detergent (*i.e.,* metal (C₁₀ to C₄₀)hydrocarbyl-substituted salicylates) is low-based, more preferably essentially neutral.

Hydroxybenzoic acids, particularly salicylic acids, are typically prepared by the carboxylation, by the Kolbe-Schmitt process, of phenoxides, and in that case, will generally be obtained (normally in a diluent) in admixture with uncarboxylated phenol. Salicylic acids may be non-sulphurized or sulphurized, and may be chemically modified and/or contain additional substituents. Processes for sulphurizing a hydrocarbyl-substituted salicylic acid are well known to those skilled in the art, and are described, for example, in US 2007/0027057.

Suitably, the one or more C₁₀ to C₄₀ hydrocarbyl substituted hydroxybenzoic acids may be formed by the carboxylation of the corresponding one or more C₁₀ to C₄₀ hydrocarbyl substituted phenols. Typically, this process can be accomplished by treating the one or more C₁₀ to C₄₀ hydrocarbyl substituted phenols with a base to form the corresponding phenoxides, and then treating the phenoxides with carbon dioxide at an elevated pressure and temperature.

In general, neutral metal hydrocarbyl-substituted salicylates can be prepared by neutralisation of hydrocarbyl-substituted salicylic acid with an equivalent quantity of metallic base. However, a preferred method of preparing a neutral calcium salt of salicylic acid is through double decomposition of methanolic solutions of calcium chloride and sodium hydroxide in the presence of hydrocarbyl-substituted salicylic acid, followed by removal of solids and process solvents.

Suitably, the metal hydrocarbyl-substituted hydroxybenzoate detergent, as defined and identified herein, particularly the highly preferred calcium (C₁₀ to C₄₀)hydrocarbyl-substituted salicylate detergent, is present in an amount of (*i*.*e*., introduced into the crude oil in an amount of) greater than or equal to 5, preferably greater than or equal to 10, more preferably greater than or equal to 75, more preferably greater than or equal to 100, ppm by mass based on the total mass of crude oil.

Suitably, the metal hydrocarbyl-substituted hydroxybenzoate detergent, particularly the highly preferred calcium (C₁₀ to C₄₀)hydrocarbyl-substituted salicylate detergent, is present in an amount of (*i*.*e*., introduced into the crude oil in an amount of) less than or equal to 10,000, preferably less than or equal to 5000, more preferably less than or equal to 1000, more preferably less than or equal to 750, more preferably less than or equal to 500, ppm by mass based on the total mass of crude oil.

Suitable, metal hydrocarbyl-substituted hydroxybenzoate detergent for use in the invention are available from Infineum UK Ltd.

### ADDITIVE B(ii) - Alkenyl-Substituted Anhydride or Acid

Additive B(ii) is a poly(C₂ to C₆)alkenyl-substituted anhydride or poly(C₂ to C₆)alkenyl-substituted acid, as defined herein. Suitably, the poly(C₂ to C₆)alkenyl-substituted anhydride or poly(C₂ to C₆)alkenyl-substituted acid is oil-soluble or oil-dispersible.

Suitably, each of the poly(C₂ to C₆)alkenyl-substituted anhydride and poly(C₂ to C₆)alkenyl-substituted acid (B)(ii), as defined herein, include a poly(C₂ to C₆)alkenyl substituent group, which substituent group may be formed by homo-polymerisation or copolymerisation of one or more (C₂ to C₆)alkene(s).

Suitable polymers employed in the formation of the anhydride(s) and acid(s) of (B)(ii) to generate the poly(C₂ to C₆)alkenyl moieties include homopolymers, interpolymers or lower molecular weight hydrocarbons. One family of such polymers comprise polymers of ethylene and/or at least one C₃ to C₆ alpha-olefin having the formula H₂C=CHR¹ wherein R¹ is straight or branched-chain alkyl radical comprising 1 to 4 carbon atoms and wherein the polymer contains carbon-to-carbon unsaturation, preferably a high degree of terminal ethenylidene unsaturation. Preferably, such polymers comprise interpolymers of ethylene and at least one alpha-olefin of the above formula, wherein R¹ is alkyl of from 1 to 4, more preferably from 1 to 2, carbon atoms. Therefore, useful alpha-olefin monomers and comonomers include, for example, propylene, but-1-ene-1, hex-1-ene, and mixtures thereof (*e*.*g*., mixtures of propylene and but-1-ene-1). Exemplary of such polymers are propylene homopolymers, but-1-ene homopolymers, ethylene-propylene copolymers, ethylene-but-1-ene copolymers, and propylene-butene copolymers, wherein the polymer contains at least some terminal and/or internal unsaturation. Preferred copolymers are unsaturated copolymers of ethylene and propylene and copolymers of ethylene and but-1-ene. It is preferred that the polymers comprise only alpha-olefin homopolymers, interpolymers of alpha-olefin comonomers and interpolymers of ethylene and alpha-olefin comonomers. The molar ethylene content of the polymers employed is preferably in the range of 0 to 80, more preferably 0 to 60%. When propylene and/or butene-1 are employed as comonomer(s) with ethylene, the ethylene content of such copolymers is most preferably between 15 and 50 %, although higher or lower ethylene contents may be present.

These polymers may be prepared by polymerizing an alpha-olefin monomer, or mixtures of alpha-olefin monomers, or mixtures comprising ethylene and at least one C₃ to C₆ alpha-olefin monomer, in the presence of a catalyst system comprising at least one metallocene (*e*.*g*., a cyclopentadienyl-transition metal compound) and an alumoxane compound. Using this process, a polymer in which 95 % or more of the polymer chains possess terminal ethenylidene-type unsaturation can be provided. The percentage of polymer chains exhibiting terminal ethenylidene unsaturation may be determined by FTIR spectroscopic analysis, titration, or C¹³ NMR. Interpolymers of this latter type may be characterized by the formula POLY-C(R¹)=CH₂ wherein R¹ is C₁ to C₄, preferably C₁ to C₂, alkyl, (*e*.*g*., methyl or ethyl) and wherein POLY represents the polymer chain. The chain length of the R¹ alkyl group will vary depending on the comonomer(s) selected for use in the polymerization. A minor amount of the polymer chains can contain terminal ethenyl, *i.e.,* vinyl, unsaturation, *i.e.,* POLY-CH=CH₂, and a portion of the polymers can contain internal mono-unsaturation, *e*.*g*., POLY-CH=CH(R¹), wherein R¹ is as defined above. These terminally unsaturated interpolymers may be prepared by known metallocene chemistry and may also be prepared as described in U.S. Patent Nos. 5,498,809; 5,663,130; 5,705,577; 5,814,715; 6,022,929; and 6,030,930.

Another useful class of polymers is that of polymers prepared by cationic polymerization of isobutene. Common polymers from this class include polyisobutenes, otherwise known as polyisobutylenes, obtained by polymerization of a C₄ refinery stream having a butene content of 35 to 75 mass %, and an isobutene content of 30 to 60 mass %, in the presence of a Lewis acid catalyst, such as aluminum trichloride or boron trifluoride. A preferred source of monomer for making poly-n-butenes is a petroleum feedstream such as Raffinate II. These feedstocks are disclosed in the art such as in U.S. 4,952,739. Polyisobutene is a most preferred substituent group of said anhydride(s) or acid(s) (B)(ii) because it is readily available by cationic polymerization from butene streams (*e*.*g*., using AlCl₃ or BF₃ catalysts). Such polyisobutenes generally contain residual unsaturation in amounts of one ethylenic double bond per polymer chain, positioned along the chain. A preferred embodiment utilizes polyisobutene prepared from a pure isobutene stream or a Raffinate I stream to prepare reactive isobutene polymers with terminal vinylidene olefins. Preferably, these polymers, referred to as highly reactive polyisobutylene (HR-PIB), have a terminal vinylidene content of at least 65, *e.g.,* 70, more preferably at least 80, most preferably at least 85%. The preparation of such polymers is described, for example, in U.S. 4,152,499. HR-PIB is known and HR-PIB is commercially available under the tradenames Glissopal^{™} (from BASF) and Ultravis^{™} (from BP-Amoco).

Methods for making polyisobutene are known. Polyisobutene can be functionalized by halogenation (*e*.*g*., chlorination), the thermal "ene" reaction, or by free radical grafting using a catalyst (*e*.*g*., peroxide), as described below.

The hydrocarbon or polymer backbone may be functionalized with carboxylic anhydride-producing moieties selectively at sites of carbon-to-carbon unsaturation on the polymer or hydrocarbon chains, or randomly along chains using any of the three processes mentioned above or combinations thereof, in any sequence.

Processes for reacting polymeric hydrocarbons with unsaturated carboxylic acids, anhydrides and the preparation of derivatives from such compounds are disclosed in U.S. 3,087,936; 3,172,892; 3,215,707; 3,231,587; 3,272,746; 3,275,554; 3,381,022; 3,442,808; 3,565,804; 3,912,764; 4,110,349; 4,234,435; 5,777,025; 5,891,953; as well as EP 0 382 450 B1; CA-1,335,895 and GB-A-1,440,219. The polymer or hydrocarbon may be functionalized, with carboxylic acid anhydride moieties by reacting the polymer or hydrocarbon under conditions that result in the addition of functional moieties or agents, *i.e.,* acid anhydride, onto the polymer or hydrocarbon chains primarily at sites of carbon-to-carbon unsaturation (also referred to as ethylenic or olefinic unsaturation) using the halogen assisted functionalization (*e.g.,* chlorination) process or the thermal "ene" reaction.

Selective functionalization can be accomplished by halogenating, *e.g.,* chlorinating or brominating, the unsaturated α-olefin polymer to 1 to 8, preferably 3 to 7, mass % chlorine, or bromine, based on the weight of polymer or hydrocarbon, by passing the chlorine or bromine through the polymer at a temperature of 60 to 250, preferably 110 to 160, *e.g.,* 120 to 140°C, for 0.5 to 10, preferably 1 to 7, hours. The halogenated polymer or hydrocarbon (hereinafter backbone) is then reacted with sufficient monounsaturated reactant capable of adding the required number of functional moieties to the backbone, *e.g.,* monounsaturated carboxylic reactant, at 100 to 250, usually 180 to 235°C, for 0.5 to 10, *e.g.,* 3 to 8, hours, such that the product obtained will contain the desired number of moles of the monounsaturated carboxylic reactant per mole of the halogenated backbones. Alternatively, the backbone and the monounsaturated carboxylic reactant are mixed and heated while adding chlorine to the hot material.

While chlorination normally helps increase the reactivity of starting olefin polymers with monounsaturated functionalizing reactant, it is not necessary with some of the polymers or hydrocarbons contemplated for use in the present invention, particularly those preferred polymers or hydrocarbons which possess a high terminal bond content and reactivity. Preferably, therefore, the backbone and the monounsaturated functionality reactant, (carboxylic reactant), are contacted at elevated temperature to cause an initial thermal "ene" reaction to take place. Ene reactions are known.

The hydrocarbon or polymer backbone can be functionalized by random attachment of functional moieties along the polymer chains by a variety of methods. For example, the polymer, in solution or in solid form, may be grafted with the monounsaturated carboxylic reactant, as described above, in the presence of a free-radical initiator. When performed in solution, the grafting takes place at an elevated temperature in the range of 100 to 260, preferably 120 to 240°C. Preferably, free-radical initiated grafting would be accomplished in a mineral lubricating oil solution containing, *e.g.,* 1 to 50, preferably 5 to 30, mass % polymer based on the initial total oil solution.

The free-radical initiators that may be used are peroxides, hydroperoxides, and azo compounds, preferably those that have a boiling point greater than 100°C and decompose thermally within the grafting temperature range to provide free-radicals. Representative of these free-radical initiators are azobutyronitrile, 2,5-dimethylhex-3-ene-2, 5-bis-tertiary-butyl peroxide and dicumene peroxide. The initiator, when used, is typically in an amount of between 0.005 and 1% by weight based on the weight of the reaction mixture solution. Typically, the aforesaid monounsaturated carboxylic reactant material and free-radical initiator are used in a weight ratio range of from 1.0:1 to 30:1, preferably 3:1 to 6:1. The grafting is preferably carried out in an inert atmosphere, such as under nitrogen blanketing. The resulting grafted polymer is characterized by having carboxylic acid (or derivative) moieties randomly attached along the polymer chains, it being understood that some of the polymer chains remain ungrafted. The free radical grafting described above can be used for the other polymers and hydrocarbons used in the present invention.

The preferred monounsaturated reactants that are used to functionalize the backbone comprise mono- and dicarboxylic acid material, *i.e.,* acid, or acid derivative material, including (i) monounsaturated C₄ to C₁₀ dicarboxylic acid wherein (a) the carboxyl groups are vicinyl, (*i.e.,* located on adjacent carbon atoms) and (b) at least one, preferably both, of the adjacent carbon atoms are part of the mono unsaturation; (ii) derivatives of (i) such as anhydrides or C₁ to C₅ alcohol derived mono- or diesters of (i); (iii) monounsaturated C₃ to C₁₀ monocarboxylic acid wherein the carbon-carbon double bond is conjugated with the carboxy group, *i.e.,* of the structure -C=C-CO-; and (iv) derivatives of (iii) such as C₁ to C₅ alcohol derived mono- or diesters of (iii). Mixtures of monounsaturated carboxylic materials (i) - (iv) also may be used. Upon reaction with the backbone, the monounsaturation of the monounsaturated carboxylic reactant becomes saturated. Thus, for example, maleic anhydride becomes backbone-substituted succinic anhydride, and acrylic acid becomes backbone-substituted propionic acid. Exemplary of such monounsaturated carboxylic reactants are fumaric acid, itaconic acid, maleic acid, maleic anhydride, chloromaleic acid, chloromaleic anhydride, acrylic acid, methacrylic acid, crotonic acid, cinnamic acid, and lower alkyl (*e.g.,* C₁ to C₄ alkyl) acid esters of the foregoing, *e*.*g*., methyl maleate, ethyl fumarate, and methyl fumarate.

To provide the required functionality, the monounsaturated carboxylic reactant, preferably maleic anhydride, typically will be used in an amount ranging from equimolar amount to 100, preferably 5 to 50, mass % excess, based on the moles of polymer or hydrocarbon. Unreacted excess monounsaturated carboxylic reactant can be removed from the final dispersant product by, for example, stripping, usually under vacuum, if required.

Preferably, the poly(C₂ to C₆)alkenyl-substituted anhydride which (B)(ii) may represent comprises poly(C₂ to C₆)alkenyl-substituted succinic anhydride, such as poly(ethylenyl) succinic anhydride(s), poly(propylenyl) succinic anhydride(s), poly(butenyl) succinic anhydride(s), poly(isobutenyl) succinic anhydride(s) or combinations thereof.

Preferably, the poly(C₂ to C₆)alkenyl-substituted acid which (B)(ii) may represent comprises a poly(C₂ to C₆)alkenyl-substituted di-acid, especially a poly(C₂ to C₆)alkenyl-substituted succinic acid, such as poly(ethylenyl) succinic acid(s), poly(propylenyl) succinic acid(s), poly(butenyl) succinic acid(s), poly(isobutenyl) succinic acid(s) or combinations thereof.

A most preferred poly(C₂ to C₆)alkenyl-substituted anhydride which (B)(ii) may represent comprises a polyisobutenyl-substituted succinic anhydride (PIBSA).

A most preferred poly(C₂ to C₆)alkenyl-substituted acid which (B)(ii) may represent comprises a polyisobutenyl-substituted succinic acid.

Preferably, the number average molecular weight (Mn) of the poly(C₂ to C₆)alkenyl substituent group of said poly(C₂ to C₆)alkenyl-substituted acid anhydride or poly(C₂ to C₆)alkenyl-substituted acid (B)(ii), as defined or identified herein, particularly the number average molecular weight (Mn) of the polyisobutenyl substituent group of the preferred polyisobutenyl-substituted succinic anhydride or polyisobutenyl-substituted succinic acid, is greater than or equal to 100, preferably greater than or equal to 150, preferably greater than or equal to 200, preferably greater than or equal to 250, preferably greater than or equal to 300, preferably greater than or equal to 350, preferably greater than or equal to 400, daltons.

Preferably, the number average molecular weight (Mn) of the poly(C₂ to C₆)alkenyl substituent group of said poly(C₂ to C₆)alkenyl-substituted acid anhydride or poly(C₂ to C₆)alkenyl-substituted acid (B)(ii), as defined or identified herein, particularly the number average molecular weight (Mn) of the polyisobutenyl substituent group of the preferred polyisobutenyl-substituted succinic anhydride or polyisobutenyl-substituted succinic acid, is less than or equal to 7000, preferably less than or equal to 5000, preferably less than or equal to 4000, peferably less than or equal to 3000, daltons.

Suitably, the ratio of the weight average molecular weight (M_{w}) to number average molecular weight (Mₙ), *i.e.,* M_{w}/Mₙ, of the poly(C₂ to C₆)alkenyl substituent group(s) of said poly(C₂ to C₆)alkenyl-substituted acid anhydride(s) or poly(C₂ to C₆)alkenyl-substituted acid(s), as defined herein, is from 1.5 to 4.0.

Suitably, the average succination ratio of the one or more poly(C₂ to C₆)alkenyl succinic anhydride(s), as defined herein, especially said one or more polyisobutenyl succinic anhydride(s), is greater than or equal to 1.35, more preferably greater than or equal to 1.40, even more preferably greater than or equal to 1.45, even more preferably greater than or equal to 1.50, even more preferably greater than or equal to 1.55. Preferably, the average succination ratio of the one or more poly(C₂ to C₆)alkenyl succinic anhydride(s), as defined herein, especially said one or more polyisobutenyl succinic anhydride(s), is less than or equal to 4.00, more preferably less than or equal to 3.50, even more preferably less than or equal to 3.20, even more preferably less than or equal to 3.00, even more preferably less than or equal to 2.75, even more preferably less than or equal to 2.50. A highly preferred average succination ratio of the one or more poly(C₂ to C₆)alkenyl succinic anhydride(s), especially said one or more polyisobutenyl succinic anhydride(s), is from 1.35 to 3.50, especially from 1.40 to 3.00.

A highly preferred additive (B)(ii) comprises polyisobutenyl succinic anhydride or polyisobutenyl succinic acid having a Mn of from 400 to 4000 daltons, particularly polyisobutenyl succinic anhydride having a Mn of from 400 to 4000 daltons, especially 400 to 3000 daltons. Polyisobutenyl succinic anhydride(s) or polyisobutenyl succinic acid(s) having a Mn of from 400 to 1250 daltons are particularly preferred.

Suitably, the poly(C₂ to C₆)alkenyl-substituted acid anhydride or poly(C₂ to C₆)alkenyl-substituted acid (B)(ii), as defined or identified herein, particularly the highly preferred polyisobutenyl-substituted succinic anhydride or polyisobutenyl-substituted succinic acid, is present (*i*.*e*., introduced into the oil) in an amount of greater than or equal to 5, preferably greater than or equal to 10, more preferably greater than or equal to 15, more preferably greater than or equal to 20, more preferably greater than or equal to 25, ppm by mass based on the total mass of crude oil.

Suitably, in each aspect of the invention, the poly(C₂ to C₆)alkenyl-substituted acid anhydride or poly(C₂ to C₆)alkenyl-substituted acid (B)(ii), as defined or identified herein, particularly the highly preferred polyisobutenyl-substituted succinic anhydride or polyisobutenyl-substituted succinic acid, is present (*i*.*e*., introduced into the oil) in an amount of less than or equal to 5000, preferably less than or equal to 3000, more preferably less than or equal to 1000, more preferably less than or equal to 750, more preferably less than or equal to 500, more preferably less than or equal to 250, ppm by mass based on the total mass of crude oil.

### ADDITIVE B(iii) - Hvdrocarbvl-Substituted Amide or Imide

Additive (B)(iii) is an aliphatic hydrocarbyl acid amide or an aliphatic hydrocarbyl acid imide, or a combination thereof. The aliphatic hydrocarbyl acid amide and said aliphatic hydrocarbyl acid imide is each independently obtainable by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, aliphatic hydrocarbyl-substituted di-acid, or an aliphatic hydrocarbyl-substituted diol, wherein the aliphatic alkylene polyamine has at least two carbon atoms and at least two amine groups wherein at least one of amine groups is a primary amine group.

It will be appreciated that additive (B)(iii) is an ashless organic additive. Suitably, additive (B)(iii) is oil-soluble or oil-dispersible.

Suitably, (B)(iii) the aliphatic hydrocarbyl acid amide or aliphatic hydrocarbyl acid imide, as defined or identified herein, is present in an amount of greater than or equal to 5, preferably greater than or equal to 10, more preferably greater than or equal to 15, more preferably greater than or equal to 20, more preferably greater than or equal to 25, ppm by mass based on the total mass of crude oil.

Suitably, (B)(iii) the aliphatic hydrocarbyl acid amide or aliphatic hydrocarbyl acid imide, as defined or identified herein, is present in an amount of less than or equal to 5000, preferably less than or equal to 3000, more preferably less than or equal to 1000, more preferably less than or equal to 750, more preferably less than or equal to 500, more preferably less than or equal to 250, ppm by mass based on the total mass of crude oil.

### (B)(iii)(a) Aliphatic Alkylene Polyamine

The aliphatic alkylene polyamine (B)(iii)(a) which may be reacted with either (B)(iii)(b) said aliphatic (C₁₀ to C₃₀)hydrocarbyl-substituted monocarboxylic acid or derivative thereof, as defined herein, or with (B)(iii)(c) said aliphatic hydrocarbyl-substituted anhydride, -diacid or -diol, each as further defined herein, has at least two carbon atoms and at least two amine groups, wherein at least one of the amine groups is a primary amine group.

Suitably, the aliphatic alkylene polyamine may be an alkyl polyamine, as defined and identified herein, or a polyalkylene polyamine, as defined and identified herein, or a combination thereof.

Suitably, the alkyl polyamine has a primary amine group bonded to a first carbon atom of an alkanediyl radical and at least a second amine group bonded to a different carbon atom of said alkanediyl radical. Accordingly, the alkanediyl radical has at least two carbon atoms. Suitable alkyl polyamine(s) include alkane(s) which are terminated with at least one primary amine group and further substituted and/or terminated with at least one further amine group. Accordingly, suitable alkyl polyamines include 1,2-diaminoethane, 1,3-diaminopropane, 1,4-diaminobutane, 1,2-diaminomethyl-3-aminopropane, especially 1,2-diaminomethyl-3-aminopropane.

Suitably, the polyalkylene polyamine has two or more alkanediyl radical repeating units and at least 3 amine groups. The said first amine group is bonded to the second amine group by a first alkanediyl radical, and the second amine group is bonded to the third amine group by a second alkanediyl radical. Accordingly, the polyalkylene polyamine includes at least one primary amine group and at least one secondary amine group.

Preferably, the aliphatic alkylene polyamine comprises a polyalkylene polyamine, as defined and identified herein.

The aliphatic alkylene polyamine, as defined and identified herein, contains at least 2, and typically from 2 to 60, preferably 2 to 40, more preferably 4 to 20, even more preferably 4 to 20, even more preferably 4 to 12, especially 4 to 10 total carbon atoms.

The aliphatic alkylene polyamine, as defined and identified herein, contains at least two amine groups, and typically from 2 to 12, preferably 2 to 10, more preferably 3 to 10, even more preferably 3 to 8, even more preferably 3 to 6, total amine groups. Highly preferred aliphatic alkylene polyamines include 3, 4, 5, 6, 7, or 8 total amine groups, especially 3, 4, 5, or 6 total nitrogen atoms.

Suitably, each nitrogen atom of the aliphatic alkylene polyamine may independently represent a primary, secondary or tertiary amine group.

In an embodiment, the aliphatic alkylene polyamine includes at least two primary amine groups (*i.e.,* at least 2 nitrogen atoms represent a primary amine group). It is preferred that the aliphatic alkylene polyamine has a total number of two primary amine groups.

In an embodiment, the aliphatic alkylene polyamine includes at least one secondary amine groups (*i.e.,* at least 1 nitrogen atom represents a secondary amine group), and typically from 1 to 10, preferably 1 to 8, more preferably 1 to 7, even more preferably 1 to 6, even more preferably 1 to 4, secondary amine group(s).

In an embodiment, albeit less preferred, the aliphatic alkylene polyamine includes at least one tertiary amine group, preferably a single tertiary amine group (*i.e.,* at least 1 nitrogen atom represents a tertiary amine group).

Suitably, the aliphatic alkylene polyamine includes a primary amine group and at least one further primary amine and/or secondary amine group.

Preferably, the aliphatic alkylene polyamine, includes at least two primary amine groups, preferably only two primary amine groups with any further amine group(s) being secondary amine group(s). Accordingly, preferred aliphatic alkylene polyamine(s) include those which include a combination of primary amine group(s) and secondary amine group(s) only.

Accordingly, preferred aliphatic alkylene polyamines, including the more preferred polyalkylene polyamine(s), include at least one primary amine group, preferably two primary amine groups, and at least one secondary amine group, typically from 1 to 10, preferably 1 to 8, more preferably 1 to 7, even more preferably 1 to 6, even more preferably 1 to 4, secondary amine group(s). Highly preferred aliphatic alkylene polyamine(s), including the preferred polyalkylene polyamine(s), comprise of only primary and secondary amine groups, have two primary amine groups and at least one secondary amine group, typically from 1 to 10, preferably 1 to 8, more preferably 1 to 7, even more preferably 1 to 6, secondary amine group(s).

The following aliphatic alkylene polyamine description is subject to the above constraints regarding carbon and nitrogen atom content, and the variable groups for the following formulae are to be selected in conformance with such constraints. Additionally, the following aliphatic alkylene polyamine description is also limited to amines which must have at least one nitrogen atom present in the form of a primary amine group and at least one of the remaining nitrogen atoms present in the form of a primary or secondary amine group.

Suitably, the aliphatic alkylene polyamine may comprise an aliphatic (C₂ to C₆₀), preferably (C₂ to C₄₀), more preferably (C₂ to C₂₀), even more preferably (C₄ to C₂₀), even more preferably (C₄ to C₁₂), especially (C₄ to C₁₀), alkylene polyamine. Suitably, the alkylene group of said aliphatic alkylene polyamine comprises an aliphatic acyclic alkylene group. Suitably, the alkylene group of said aliphatic alkylene polyamine may be straight or branched chain, preferably a straight chain. Preferably, the aliphatic alkylene group is unsubstituted. It will be appreciated that the alkylene group of said aliphatic alkylene polyamine is terminated with at least one primary amine group and/or interrupted by one or more nitrogen atoms to form secondary amine group(s). A preferred aliphatic alkylene polyamine comprises an aliphatic straight-chain acyclic (C₂ to C₆₀) alkylene polyamine.

A highly preferred class of aliphatic alkylene polyamine(s) comprises the polyalkylene polyamine(s), especially the polyethylene polyamine(s). The polyalkylene polyamine(s) comprise at least 3 amine groups, wherein at least one of the amine groups is a primary amine group and at least one of the amine groups is a secondary amine group..

Preferably, the polyalkylene polyamine contains at least 4, and typically from 4 to 60, preferably 4 to 40, more preferably 4 to 20, even more preferably 4 to 12, especially 4 to 10 total carbon atoms.

Suitably, the polyalkylene polyamine contains at least three amine groups, and typically from 3 to 12, preferably 3 to 10, more preferably 3 to 8, even more preferably 3 to 6, total amine groups. Highly preferred polyalkylene polyamines include 3, 4, 5, 6, 7, or 8 total amine groups, especially 3, 4, 5, or 6 total amine groups.

Suitably, each nitrogen atom of the polyalkylene polyamine may independently represent a primary, secondary, or tertiary amine group.

Preferably, the polyalkylene polyamine includes at least two primary amine groups. More preferably, the polyalkylene polyamine has a total number of two primary amine groups.

The polyalkylene polyamine includes at least one secondary amine group, and typically from 1 to 10, preferably 1 to 8, more preferably 1 to 7, even more preferably 1 to 6, even more preferably 1 to 5, even more preferably 1 to 4, secondary amine group(s).

Preferably, the polyalkylene polyamine, includes only two primary amine group and all of the remaining amine group(s) are secondary amine group(s).

The polyalkylene polyamine(s) may be represented by a compound of formula II - 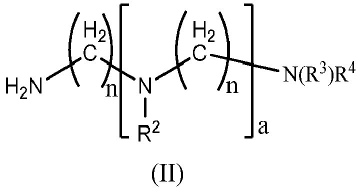 wherein: each R² independently represents at each occurrence hydrogen, C₁ to C₁₂ alkyl group, C₂ to C₆ alkenyl group or Ci to C₁₂ alkyl amine; R³ and R⁴ each independently represent hydrogen, C₁ to C₁₂ alkyl group, C₂ to C₆ alkenyl group or C₁ to C₁₂ alkyl amine; a is an integer from 0 to 10; each n independently represents at each occurrence an integer from 2 to 6; and with the proviso that when a is 0 then at least one of R³ or R⁴ represents hydrogen.

Preferably, each R² in a compound of formula II independently represents at each occurrence hydrogen, C₁ to C₁₂ alkyl group or C₁ to C₁₂ alkyl amine such as -(CH₂)ₙN(R³)R⁴ where n, R³ and R⁴ are as defined herein. More preferably, each R² in a compound of formula II independently represents at each occurrence hydrogen or C₂ to C₆ alkyl amine, for example -(CH₂)ₙN(R³)R⁴ where n is 2 to 6 and R³ and R⁴ are as defined herein. Even more preferably, each R² in a compound of formula II independently represents at each occurrence hydrogen or C₂ to C₄ alkyl amine, for example -(CH₂)ₙN(R³)R⁴ where n is 2 to 4 and R³ and R⁴ are as defined herein. Most preferably, each R² in a compound of formula II independently represents at each occurrence hydrogen or -C₂H₄NH₂ (*i*.*e*., aminoethyl), especially hydrogen.

Preferably, R³ in a compound of formula II represents hydrogen or C₁ to C₆ alkyl group, especially hydrogen.

Preferably, R⁴ in a compound of formula II represents hydrogen or C₁ to C₆ alkyl group, especially hydrogen.

Preferably, a in a compound of formula II is an integer from 1 to 6, more preferably 1 to 4, especially 3.

Preferably, each n in a compound of formula II independently represents at each occurrence an integer from 2 to 4.

Preferably, each n in a compound of formula II is identical.

Most preferably each n in a compound of formula II is 2.

Non-limiting examples of suitable polyalkylene polyamine compounds include: polyethylene polyamines such as diethylene triamine; triethylene tetramine; tetraethylene pentamine; pentaethlyene hexamine; N²-(aminoethyl)triethylene tetramine; and polypropylene polyamines such as di-(1,2-propylene) triamine; di(1,3-propylene) triamine; and mixtures thereof.

A most preferred polyalkylene polyamine is a polyethylene polyamine (*i*.*e*., unsubstituted polyethylene polyamine). Preferred specific polyethylene polyamines include: diethylene triamine; triethylene tetramine; tetraethylene pentamine; and pentaethlyene hexamine; and mixtures thereof. Diethylene triamine, tetraethylene pentamine, and pentaethylne hexamine are especially preferred.

The most preferred polyethylene polyamine is tetraethylene pentamine.

The aliphatic alkylene polyamines may be obtained from commercial suppliers such as Delamine BV or Huntsman Ethylene Amines Ltd.

Commercial mixtures of amine compounds may advantageously be used. For example, one process for preparing polyalkylene polyamines involves the reaction of an alkylene dihalide (*e*.*g*., ethylene dichloride or propylene dichloride) with ammonia which may result in a complex mixture wherein pairs of nitrogen atoms are joined by alkylene groups, forming such compounds as tetraethylene pentamine, N²-(aminoethyl)triethylene tetramine and the isomeric piperazines, such as N-(2-(4-(2-aminoethyl)piperazin-1-yl)ethyl)ethanediamine and N¹-(2-aminoethyl)-N²-(2-(piperazin-1-yl)ethyl)ethane-1,2-diamine.

A highly preferred aliphatic alkylene polyamine compound is tetraethylene pentamine. The tetraethylene pentamine may be employed singly. Alternatively, the tetraethylene polyamine may form part of a mixture of polyamines, for example, the mixture of polyamines may include, in addition to tetraethylene polyamine, N²-(aminoethyl)triethylene tetramine and the isomeric piperazines, such as N-(2-(4-(2-aminoethyl)piperazin-1-yl)ethyl)ethanediamine and N¹-(2-aminoethyl)-N²-(2-(piperazin-1-yl)ethyl)ethane-1,2-diamine.

Suitably, when the aliphatic alkylene polyamine compound comprises a mixture of at least two or more aliphatic alkylene polyamines, as defined hereinbefore, such a mixture may include tetraethylene pentamine and N²-(aminoethyl)triethylene tetramine.

### (B)(iii)(b) Aliphatic Hydrocarbyl-Substituted Monocarboxylic Acid

The aliphatic alkylene polyamine (B)(iii)(a), as defined herein, may be reacted with an aliphatic (C₉ to C₂₉)hydrocarbyl-substituted monocarboxylic acid or derivative thereof (B)(iii)(b) to form said aliphatic hydrocarbyl acid amide Additive (B)(iii). The reaction is conducted in a manner and under conditions sufficient to react at least one amine group of the aliphatic alkylene polyamine (B)(iii)(a) with the aliphatic hydrocarbyl mono acid or derivative thereof (B)(iii)(b) of formula I to form at least one amide bond.

Suitably, it will be appreciated that the aliphatic (C₉ to C₂₉)hydrocarbyl-substituted monocarboxylic acid or derivative thereof (B)(iii)(b) has a total number of from 10 to 30 carbon atoms comprising 9 to 29 carbon atoms of the aliphatic (C₉ to C₂₉)hydrocarbyl-substituent and 1 carbon atom from the acidic carbonyl group.

Suitably, the aliphatic (C₉ to C₂₉)hydrocarbyl-substituted monocarboxylic acid or derivative thereof (B)(iii)(b) may be represented by a compound of formula I: 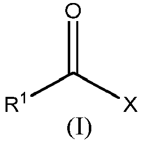 wherein R¹ represents a C₉ to C₂₉ aliphatic hydrocarbyl group and X represents -OH or a suitable leaving group in a compound of formula I.

Suitable leaving groups which X may represent include -OC(O)R¹, -OR⁵ or halo wherein R¹ represents a C₉ to C₂₉ aliphatic hydrocarbyl group as defined herein and R⁵ represents a C₁ to C₈ aliphatic hydrocarbyl group. More preferably, X represents -OH or - OC(O)R¹ *i.e.,* the aliphatic (C₉ to C₂₉)hydrocarbyl monocarboxylic acid or anhydride derivative thereof. Most preferably, X represents -OH in a compound of formula I, *i.e.,* the compounds of formula I represent an aliphatic (C₉ to C₂₉) hydrocarbyl monocarboxylic acid having a terminal carboxylic acid group.

R¹ in a compound of formula I represents a C₉ to C₂₉ aliphatic hydrocarbyl group, preferably a C₁₁ to C₂₃ aliphatic hydrocarbyl group, even more preferably a C₁₅ to C₂₀ aliphatic hydrocarbyl group, even more preferably a C₁₆ to C₁₈ aliphatic hydrocarbyl group, especially a C₁₇ aliphatic hydrocarbyl group.

Suitably, the aliphatic hydrocarbyl group which R¹ represents in a compound of formula 1 may be saturated or unsaturated, acylic or part acylic and part cyclic, or straight chain or branched chain. Preferably, the aliphatic hydrocarbyl group which R¹ represents in a compound of formula 1 is a saturated or unsaturated acylic hydrocarbyl group, which hydrocarbyl group may be straight chain or branched chain.

Preferred aliphatic hydrocarbyl groups which R¹ may represent include alkyl and alkenyl groups.

Accordingly, in an embodiment, the aliphatic hydrocarbyl groups which R¹ may represent comprises a C₉ to C₂₉, preferably a C₁₁ to C₂₃, even more preferably a C₁₅ to C₂₀, even more preferably a C₁₆ to C₁₈, especially a C₁₇, alkyl group, which alkyl group may be straight or branched chain, and/or which alkyl group is an acyclic alkyl group.

Accordingly, in an alternative embodiment, the aliphatic hydrocarbyl groups which R¹ may represent comprises a C₉ to C₂₉, preferably a C₁₁ to C₂₃, even more preferably a C₁₅ to C₂₀, even more preferably a C₁₆ to C₁₈, especially a C₁₇, alkyl group, which alkyl group may be straight or branched chain, and/or which alkenyl group is an acyclic alkenyl group.

Representative examples of a compound of formula I include the mono-carboxylic acids (*e*.*g*., fatty acids) such as: a nonanoic acid (*e*.*g*., perlargonic); a decanoic acid (*e.g.,* capric); an undecanoic acid; a dodecanoic acid (*e*.*g*., lauric); a tridecanoic acid; a tetradecanoic acid (*e*.*g*., myristic acid); a pentadecanoic acid; a heaxdecanoic acid (*e*.*g*., palmitic); a heptadecanoic acid (*e*.*g*., margaric); an octadecanoic acid (such as stearic and isostearic); a nonadecanoic acid; an eicosanic acid (*e*.*g*., arachidic); a docosanoic acid (*e*.*g*., behenic); a tetracosanoic acid (e.g lignoceric); a hexacosanoic acid (*e*.*g*., cerotic); a nonenoic acid; a decanoic acid; an undecanoic acid; a dodecenoic acid; a tridecanoic acid; a pentadecanoic acid; a hexadecenoic acid; a heptadecenoic acid; an octadecenoic acid (*e*.*g*., oleic); and all structural isomers, all stereoisomers, and mixtures thereof.

Accordingly, highly preferred aliphatic (C₉ to C₂₉)hydrocarbyl-substituted monocarboxylic acid(s) or derivatives thereof (B)(iii)(b) include mono-carboxylic acids of formula I, wherein said mono-carboxylic acid(s) has a total number of from 10 to 30, preferably a 12 to 24, even more preferably 16 to 20, especially 18 carbon atoms, and said hydrocarbyl substituent comprises an acyclic alkyl or acyclic alkenyl group.

The most preferred aliphatic (C₉ to C₂₉)hydrocarbyl-substituted monocarboxylic acid(s) (B)(iii)(b) include mono-carboxylic acids of formula I, wherein said mono-carboxylic acids has a total number of 18 carbon atoms and said hydrocarbyl substituent comprises an acyclic alkyl or acyclic alkenyl group. Examples of such acids include octadecanoic acid and octa decanoic acid, and all structural and stereoisomers. Specific examples of such acids include stearic acid, isostearic acid (*i*.*e*., 16-methyl heptadecanoic acid), 9-octadecenoic acid, such as oleic acid.

The most preferred aliphatic (C₉ to C₂₉)hydrocarbyl-substituted monocarboxylic acid(s) (B)(iii)(b) is isostearic acid.

The reaction of the aliphatic (C₉ to C₂₉)hydrocarbyl-substituted monocarboxylic acid or derivative thereof (B)(iii)(b) with the aliphatic alkylene polyamine (B)(iii)(a) to form said aliphatic hydrocarbyl acid amide (B)(iii) is typically carried out at an elevated temperature, for approximately 2 to 10 hours, and optionally in the presence of a suitable solvent, *e*.*g*., toluene. Typically the reaction is performed at a temperature of between 100°C to 250°C, more preferably 120°C to 200°C, and any water produced during the condensation reaction (*i.e.,* when X represents -OH in a compound of formula I) is removed, for example, using a Dean Stark apparatus. As a result of water formed in-situ by the amidation reaction, most, if not all, of the imidazoline groups are intentionally hydrolysed to primary amine groups. Suitable methods for reacting a compound of formula I with the aliphatic alkylene polyamine (B)(iii)(a) to form the aliphatic hydrocarbyl acid amide (B)(iii) additive component are described in US 5,395,539 and US 4,705,643.

Accordingly, during reaction of the aliphatic (C₉ to C₂₉)hydrocarbyl-substituted monocarboxylic acid or derivative thereof (B)(iii)(b) with the aliphatic alkylene polyamine (B)(iii)(a) sufficient amount of the compound of formula I is employed to impart oil-solubility or oil-dispersibility to the resulting aliphatic hydrocarbyl acid amide (B)(iii) additive component. Suitably, the molar ratio of the aliphatic (C₉ to C₂₉)hydrocarbyl-substituted monocarboxylic acid or derivative thereof (B)(iii)(b) of formula I the aliphatic alkylene polyamine (B)(iii)(a) is from about 2 to 10, preferably 3 to 10, most preferably 3 to 5, especially 3 to 4 molar equivalents of the compound of formula I reacted per mole of aliphatic alkylene polyamine (B)(iii)(a). Suitably, sufficient amount of the aliphatic (C₉ to C₂₉)hydrocarbyl-substituted monocarboxylic acid or derivative thereof (B)(iii)(b) of formula I is employed so that the resultant aliphatic alkylene polyamine (B)(iii)(a) has at least one reactive amine group, *i.e.,* a primary or secondary amine group. Thus, for example, when the most preferred isostearic acid is reacted with the most preferred tetraethylene pentamine (containing 5 reactive amine groups), then three molar equivalents of isostearic acid are preferably reacted per mole of tetraethylene pentamine, with the condensation reaction yielding a product mixture but with condensation preferentially taking place at the two primary amine groups and optionally one of the secondary amine groups of the tetraethylene pentamine.

Thus, for example, the reaction between isostearic acid and tetraethylene pentamine, may be represented by the following equation: 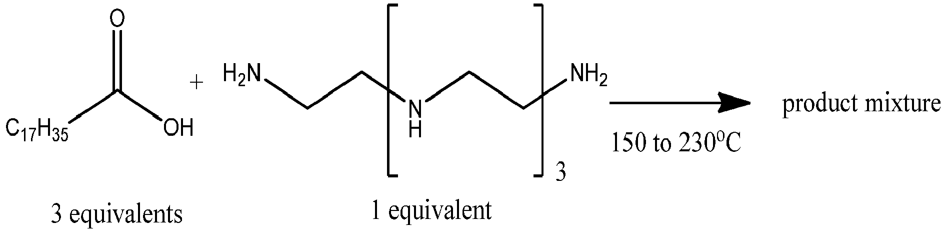 where "product mixture" represents a mixture of products including those of formulae III, IV, V, VI, and VII below:

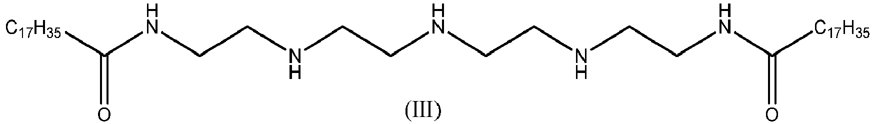

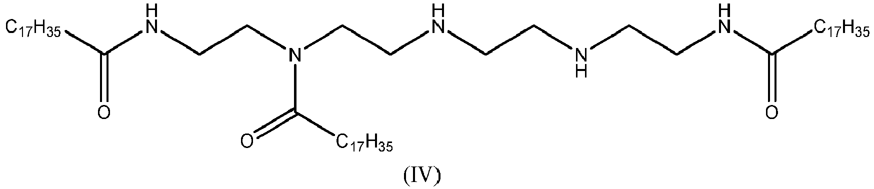

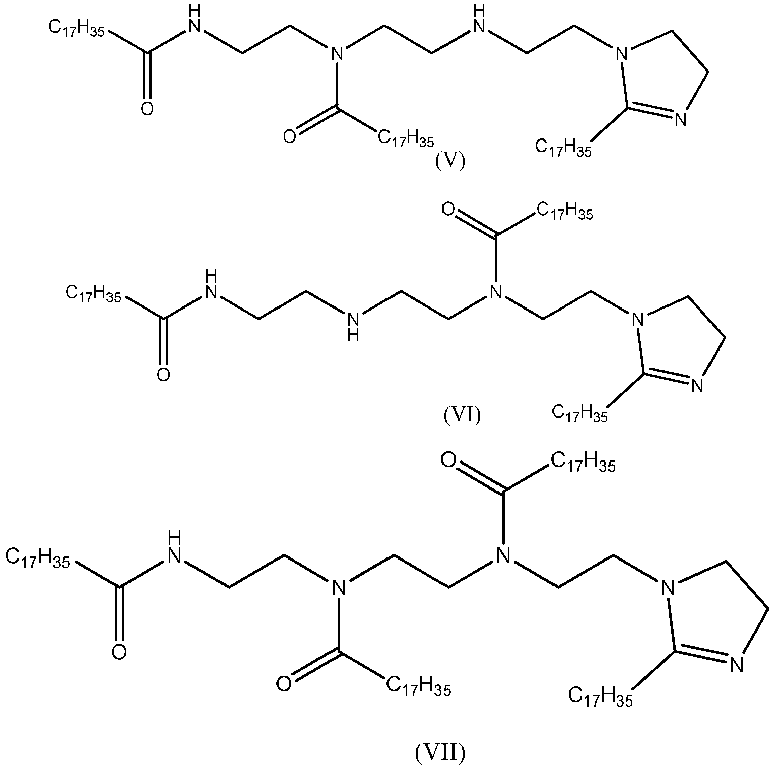

As a result of water formed in-situ by the amidation reaction, most, if not all, of the imidazoline groups of structures V, VI and VII are intentionally hydrolysed to amine groups.

Accordingly, preferred aliphatic acid amide additive(s) (B)(iii) is obtainable by reaction of a aliphatic alkylene polyamine (B)(iii)(a), as defined and identified herein, and (B)(iiii)(c) a (C₁₀ to C₃₀)alkyl-substituted succinic anhydride(s) and (C₁₀ to C₃₀)alkenyl-substituted succinic anhydride(s). Preferably, (B)(iii)(a) the aliphatic alkylene polyamine comprises a polyethylene polyamine having from 4 to 12 total carbon atoms and from 3 to 8, preferably 3 to 6, total amine groups, as defined and identified herein. More preferred aliphatic acid amide additive(s) (B)(iii) is obtainable by reaction of (B)(iii)(b) a (C₁₇)alkyl-substituted monocarboxylic acid or derivative thereof or (C₁₇)alkenyl-substituted monocarboxylic acid or derivative thereof, as defined and identified herein, and (B)(iii)(a) a polyethylene polyamine, as defined and identified herein. Even more preferred acid amide additive(s)(B)(iii) is obtainable by reacting (B)(iii)(b) isostearic acid or derivative thereof and (B)(iii)(a) a polyethylene polyamine having from 4 to 12 total carbon atoms and from 3 to 8, preferably 3 to 6, total nitrogen atoms, as defined and identified herein, especially tetraethylene pentamine.

### (B)(iii)(c) Aliphatic Hydrocarbyl-Substituted Anhydride

The aliphatic hydrocarbyl acid imide additive (B)(iii) is obtainable by reaction of the aliphatic alkylene polyamine (B)(iii)(a), as defined herein, and an aliphatic hydrocarbyl-substituted acid anhydride, an aliphatic hydrocarbyl-substituted di-acid or an aliphatic hydrocarbyl-substituted diol (B)(iii)(c).

### Preferred Alkylene Polyamine(s) (B)(iii)(a) used to form Additive (B)(iii)

Preferred aliphatic alkylene polyamine(s) (B)(iii)(a) which may be reacted with reactants (B)(iii)(c), including preferred embodiments I and II, to form the aliphatic acid imide additive (B)(iii) comprise the polyalkylene polyamine(s), especially polyethylene polyamine(s), as defined hereinbefore, such as the polyalkylene polyamines represented by a compound of formula I.

Non-limiting examples of suitable polyalkenyl polyamine compounds include: polyethylene polyamines such as diethylene triamine; triethylene tetramine; tetraethylene pentamine; pentaethlyene hexamine; and mixtures thereof. Diethylene triamine, tetraethylene pentamine and pentaethlyene hexamine are particularly preferred.

### Embodiment I

In an embodiment, the aliphatic acid imide additive (B)(iii) is obtainable by reaction of an aliphatic alkylene polyamine (B)(iii)(a), as defined herein, and additive (B)(iii)(c) which is a poly(C₂ to C₆)alkenyl-substituted anhydride or poly(C₂ to C₆)alkenyl-substituted diacid, as defined herein (*i.e*., additive (B)(ii), as defined herein is used as (B)(iii)(c)).

Suitably, preferred aliphatic alkylene polyamine(s) (B)(iii)(a) which may be used to form additive (B)(iii) are as defined and identified herein before.

Suitably, the preferred poly(C₂ to C₆)alkenyl-substituted acid anhydride(s) or poly(C₂ to C₆)alkenyl-substituted diacid(s) (B)(ii), as defined and identified herein, is used as reactant (B)(iii)(c) to form Additive (B)(iii).

Preferably, the poly(C₂ to C₆)alkenyl-substituted acid anhydride(s) which may be used as (B)(iii)(c) to form Additive (B)(iii) comprise poly(C₂ to C₆)alkenyl-substituted succinic anhydride, such as poly(ethylenyl) succinic anhydride(s), poly(propylenyl) succinic anhydride(s), poly(butenyl) succinic anhydride(s), poly(isobutenyl) succinic anhydride(s) or combinations thereof. The most preferred poly(C₂ to C₆)alkenyl-substituted acid anhydride(s) comprise polyisobutenyl-substituted succinic anhydride(s) (PIBSA).

Preferably, the poly(C₂ to C₆)alkenyl-substituted diacid(s) which may be used as (B)(iii)(c) to form Additive (B)(iii) comprise poly(C₂ to C₆)alkenyl-substituted succinic acid(s), such as poly(ethylenyl) succinic acid(s), poly(propylenyl) succinic acid(s), poly(butenyl) succinic acid(s), poly(isobutenyl) succinic acid(s) or combinations thereof. The most preferred poly(C₂ to C₆)alkenyl-substituted diacid(s) comprise polyisobutenyl-substituted succinic acid(s).

Preferably, the number average molecular weight (Mn) of the poly(C₂ to C₆)alkenyl substituent group of said poly(C₂ to C₆)alkenyl-substituted acid anhydride(s) or poly(C₂ to C₆)alkenyl-substituted diacid(s) which may be used as (B)(iii)(c), particularly the number average molecular weight (Mn) of the polyisobutenyl substituent group of the preferred polyisobutenyl-substituted succinic anhydride(s) or polyisobutenyl-substituted succinic acid(s), is a defined hereinbefore with reference to Additive (B)(ii).

Suitably, the ratio of the weight average molecular weight (M_{w}) to number average molecular weight (Mₙ), *i.e.,* M_{w}/Mₙ, of the poly(C₂ to C₆)alkenyl substituent group(s) of said poly(C₂ to C₆)alkenyl-substituted acid anhydride(s) or poly(C₂ to C₆)alkenyl-substituted acid(s), is as defined hereinbefore with reference to Additive (B)(ii).

Suitably, the average succination ratio of the one or more poly(C₂ to C₆)alkenyl succinic anhydride(s), especially said one or more polyisobutenyl succinic anhydride(s), is as defined hereinbefore with reference to Additive (B)(ii).

Accordingly, a highly preferred Additive (B)(ii) which may be used as (B)(iii)(c) to form additive (B)(iii) comprises a polyisobutenyl succinic anhydride or a polyisobutenyl succinic acid having a Mn of from 400 to 4000 daltons, particularly a polyisobutenyl succinic anhydride having a Mn of from 400 to 4000 daltons, especially 400 to 3000 daltons. Preparative methods for forming the aliphatic acid imide Additive (B)(iii) from reaction of an aliphatic alkylene polyamine (B)(iii)(a) and (B)(iii)(c) are described, for example, in U.S. Patent Nos. 6,734,148 and 6,743,757. Suitable aliphatic acid imide additive(s) (B)(iii) of Embodiment I are available from Infineum UK Ltd.

Accordingly, preferred aliphatic acid imide additive(s) (B)(iii) is obtainable by reaction of a polyethylene polyamine (B)(iii)(a), as defined and identified herein, and (B)(iii)(c) a polyisobutenyl succinic anhydride or a polyisobutenyl succinic acid having a Mn of from 400 to 4000 daltons, as defined and identified herein. More preferred aliphatic acid imide additive(s) (B)(iii) is obtainable by reaction of a polyethylene polyamine (B)(iii)(a) having from 4 to 12 total carbon atoms and from 3 to 8, preferably 3 to 6, total nitrogen atoms and (B)(iii)(c) a polyisobutenyl succinic anhydride or a polyisobutenyl succinic acid having a Mn of from 400 to 3000 daltons.

### Embodiment II

In an alternative embodiment, the aliphatic acid imide additive (B)(iii) is obtainable by reaction of an aliphatic alkylene polyamine (B)(iii)(a), as defined and identified herein, and (B)(iii)(c) an aliphatic (C₁₀ to C₃₀)hydrocarbyl-substituted acid anhydride, an aliphatic (C₁₀ to C₃₀)hydrocarbyl-substituted diacid, or an aliphatic (C₁₀ to C₃₀)hydrocarbyl-substituted diol.

Preferably, (B)(iii)(c) comprises an aliphatic (C₁₀ to C₃₀)hydrocarbyl-substituted succinic anhydride, an aliphatic (C₁₀ to C₃₀)hydrocarbyl-substituted succinic acid, or an aliphatic (C₁₀ to C₃₀)hydrocarbyl-substituted 1,4-diol.

Preferably, the aliphatic (C₁₀ to C₃₀)hydrocarbyl group substituent(s) of said anhydride, diacid or diol (B)(iii)(c) comprises aliphatic (C₁₂ to C₂₄) hydrocarbyl groups, even more preferably aliphatic (C₁₆ to C₂₀) hydrocarbyl groups, even more preferably aliphatic (C₁₆ to C₁₈) hydrocarbyl groups, especially aliphatic (C₁₈) hydrocarbyl groups.
Preferred hydrocarbyl group(s) substituent groups of said aliphatic (C₁₀ to C₃₀)hydrocarbyl-substituted acid anhydride, aliphatic (C₁₀ to C₃₀)hydrocarbyl-substituted diacid, or aliphatic (C₁₀ to C₃₀)hydrocarbyl-substituted diol (B)(iii)(c), as defined herein, include alkyl and/or alkenyl groups more preferably acyclic alkyl and/or acyclic alkenyl groups. Suitably, said alkyl and/or alkenyl groups may be straight chain or branched chain, and includes all structural isomers and/or stereoisomers.

Accordingly, highly preferred aliphatic (C₁₀ to C₃₀)hydrocarbyl-substituted acid anhydride(s) comprise (C₁₀ to C₃₀)alkyl-substituted succinic anhydride(s) and (C₁₀ to C₃₀)alkenyl-substituted succinic anhydride(s), more preferably (C₁₂ to C₂₄)alkyl-substituted succinic anhydride(s) and (C₁₂ to C₂₄)alkenyl-substituted succinic anhydride(s), even more preferably (C₁₆ to C₂₀)alkyl-substituted succinic anhydride(s) and (C₁₆ to C₂₀)alkenyl-substituted succinic anhydride(s), even more preferably (C₁₆ to C₁₈)alkyl-substituted succinic anhydride(s) and (C₁₆ to C₁₈)alkenyl-substituted succinic anhydride(s), especially (C₁₈)alkylsubstituted succinic anhydride(s) and (C₁₈)alkenyl-substituted succinic anhydride(s).

Accordingly, highly preferred aliphatic (C₁₀ to C₃₀)hydrocarbyl-substituted diacid(s) comprise (C₁₀ to C₃₀)alkyl-substituted succinic acid(s) and (C₁₀ to C₃₀)alkenyl-substituted succinic acid(s), more preferably (C₁₂ to C₂₄)alkyl-substituted succinic acid(s) and (C₁₂ to C₂₄)alkenyl-substituted succinic acid(s), even more preferably (C₁₆ to C₂₀)alkylsubstituted succinic acid(s) and (C₁₆ to C₂₀)alkenyl-substituted succinic acid(s), even more preferably (C₁₆ to C₁₈)alkyl-substituted succinic acid(s) and (C₁₆ to C₁₈)alkenyl-substituted succinic acid(s), especially (C₁₈)alkyl-substituted succinic acid(s) and (C₁₈)alkenyl-substituted succinic acid(s).

Accordingly, highly preferred aliphatic (C₁₀ to C₃₀)hydrocarbyl-substituted diol(s) comprise (C₁₀ to C₃₀)alkyl-substituted 1,4-diol(s) and (C₁₀ to C₃₀)alkenyl-substituted 1,4-diol(s), more preferably (C₁₂ to C₂₄)alkyl-substituted succinic 1,4-diol(s) and (C₁₂ to C₂₄)alkenyl-substituted 1,4-diol(s), even more preferably (C₁₆ to C₂₀)alkyl-substituted 1,4-diol(s) and (C₁₆ to C₂₀)alkenyl-substituted 1,4-diol(s), even more preferably (C₁₆ to C₁₈)alkyl-1,4-diol(s) and (C₁₆ to C₁₈)alkenyl-substituted 1,4-diol(s), especially (C₁₈)alkyl-substituted 1,4-diol(s) and (C₁₈)alkenyl-substituted 1,4-diol(s).

Most preferred are the aliphatic (C₁₀ to C₃₀)hydrocarbyl-substituted acid anhydride(s) and aliphatic (C₁₀ to C₃₀)hydrocarbyl-substituted diacid(s), as defined herein, especially the aliphatic (C₁₀ to C₃₀)hydrocarbyl-substituted acid anhydride(s), more especially the aliphatic (C₁₀ to C₃₀)hydrocarbyl-substituted succinic anhydride(s).

Suitably, the aliphatic (C₁₀ to C₃₀)hydrocarbyl-substituted acid anhydride(s), the aliphatic (C₁₀ to C₃₀)hydrocarbyl-substituted diacid(s), and the aliphatic (C₁₀ to C₃₀)hydrocarbyl-substituted diol(s), as defined herein, may be represented by a compound of formula IIIa, formula IIIb and formula IIIc, respectively: 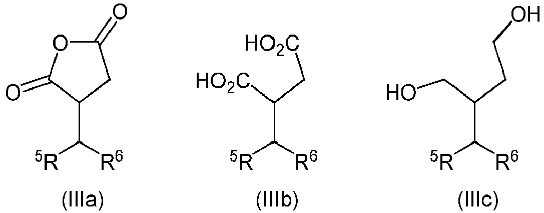 wherein R⁵ represents a C₅ to C₂₉ aliphatic hydrocarbyl group, R⁶ represents H or a C₃ to C₁₄ aliphatic hydrocarbyl group, wherein the total number of carbon atoms present in a combination of groups R⁵ and R⁶ is from 9 to 29 *(i.e.,* the hydrocarbyl substituent groups include from 10 to 30 carbon atoms).

Preferably, the total number of carbons present in a combination of groups R⁵ and R⁶ is from 11 to 23, more preferably 15 to 20, even more preferably 16 to 18, especially 17.

Preferably, R⁵ in a compound of formula I represents a C₅ to C₂₉ alkyl or C₅ to C₂₉ alkenyl group, preferably a C₅ to C₂₃ alkyl or C₅ to C₂₃ alkenyl group, even more preferably a C₇ to C₂₀ alkyl or C₇ to C₂₀ alkenyl group, even more preferably a C₇ to C₁₇ alkyl or C₇ to C₁₇ alkenyl group.

Preferably, R⁶ in a compound of formula I represents hydrogen or a C₃ to C₁₄ alkyl or C₃ to C₁₄ alkenyl group, preferably hydrogen or a C₃ to C₁₂ alkyl or C₃ to C₁₂ alkenyl group, preferably hydrogen or a C₃ to C₁₀ alkyl or C₃ to C₁₀ alkenyl group.

Accordingly, the aliphatic acid imide additive (B)(iii) may be represented by a compound of formula IV: 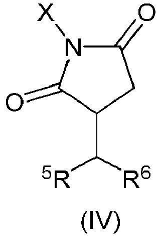 wherein R⁵ and R⁶ are each as defined for a compound of formula IIIa, IIIb and IIIc, and N is derived from the primary amine (NH₂) group of the aliphatic alkylene polyamine (B)(iii)(a) and X represents the remainder of the aliphatic alkylene polyamine (B)(iii)(a).

Suitably, the aliphatic (C₁₀ to C₃₀)hydrocarbyl-substituted acid anhydride(s), an aliphatic (C₁₀ to C₃₀)hydrocarbyl-substituted diacid(s), or an aliphatic (C₁₀ to C₃₀)hydrocarbyl-substituted diol(s) (B)(iii)(c) may be prepared by standard techniques known in the art, such as in a similar manner as described in relation to the preparation of additive (B)(ii), defined herein. For example, compounds (B)(iii)(c) may be prepared by functionalisation of the appropriate alkene with mono-unsaturated reactants, such as mono- and dicarboxylic acid material, *i.e.,* acid, or acid derivative material, including (i) monounsaturated C₄ to C₁₀ dicarboxylic acid wherein (a) the carboxyl groups are vicinyl, *(i.e.,* located on adjacent carbon atoms) and (b) at least one, preferably both, of the adjacent carbon atoms are part of the mono unsaturation; and (ii) derivatives of (i) such as anhydrides or C₁ to C₅ alcohol derived mono- or diesters of (i). Mixtures of monounsaturated carboxylic materials (i) and (ii) also may be used. Upon reaction with the backbone, the monounsaturation of the monounsaturated carboxylic reactant becomes saturated. Thus, for example, maleic anhydride becomes substituted succinic anhydride. Exemplary of such monounsaturated carboxylic reactants are fumaric acid, itaconic acid, maleic acid, maleic anhydride, chloromaleic acid, chloromaleic anhydride, and lower alkyl *(e.g.,* C₁ to C₄ alkyl) acid esters of the foregoing, *e.g.,* methyl maleate, ethyl fumarate, and methyl fumarate.

Still further, aliphatic (C₁₀ to C₃₀)hydrocarbyl-substituted diacid(s) may be prepared by hydrolysis of the corresponding aliphatic (C₁₀ to C₃₀)hydrocarbyl-substituted anhydride(s), and the aliphatic (C₁₀ to C₃₀)hydrocarbyl-substituted diacid(s) may be converted into the corresponding aliphatic (C₁₀ to C₃₀)hydrocarbyl-substituted diols(s).

Accordingly, preferred aliphatic acid imide additive(s) (B)(iii) is obtainable by reaction of a polyethylene polyamine (B)(iii)(a), as defined and identified herein, and (B)(iii)(c) a (C₁₀ to C₃₀)alkyl-substituted succinic anhydride(s) and (C₁₀ to C₃₀)alkenyl-substituted succinic anhydride(s), as defined and identified herein. More preferred aliphatic acid imide additive(s) (B)(iii) is obtainable from reaction of a polyethylene polyamine (B)(iii)(a) having from 4 to 12 total carbon atoms and from 3 to 8, preferably 3 to 6, total nitrogen atoms, as defined and identified herein, and (B)(iii)(c) a (C₁₀ to C₃₀)alkyl-substituted succinic anhydride(s) and (C₁₀ to C₃₀)alkenyl-substituted succinic anhydride(s), as defined and identified herein, preferably (C₁₆ to C₂₀)alkyl-substituted succinic anhydride(s) and (C₁₆ to C₂₀)alkenyl-substituted succinic anhydride(s), especially (C₁₈)alkyl-substituted succinic anhydride(s) and (C₁₈)alkenyl-substituted succinic anhydride(s).

### Three-Way Additive Composition

Suitably, introduction of the three-way combination of additives (B)(i), (B)(ii) and (B)(iii) into a crude oil may be accomplished by: (i) separate introduction of each additive; (ii) introduction of a two-way combination of additives and separate introduction of the third additive; or, (iii) essentially simultaneous introduction of each three additives (B)(i), (B)(ii) and (B)(iii). Essentially simultaneous introduction of each three additives is preferred and this may be accomplished by introduction of an additive composition comprising the three-way combination of additives (B)(i), (B)(ii) and (B)(iii) into a crude oil.

Accordingly, the present invention provides an additive composition suitable for introduction into to a crude oil having an asphaltene content to inhibit precipitation of asphaltene(s) from the crude oil, the additive composition comprising or made by admixing: a hydrocarbon diluent fluid; and a three-way combination of each of said additive(s) (B)(i), (B)(ii) and (B)(iii) as defined and identified herein.

Examples of suitable hydrocarbon diluent fluids include mineral oils and hydrocarbonaceous solvents. Suitable hydrocarbonaceous solvents include aromatic solvents such as the commercial mixed aromatic solvents Solvesso^{™} and Shellsol^{™}, and aliphatic solvents such as isoalkanes, including Isopar^{™} L. Other suitable solvents known in the art may be used, such as Norpar^{™} (pentanes), Exxsol^{™} (dearomatised hydrocarbon fluids), Nappar^{™} (naphthenics), Varsol^{™} (non-dearomatised hydrocarbon fluids), xylenes, and HAN 8080^{™} (aromatic solvent).

The additive composition may further contain a hydrophobic oil solubilizer and/or a dispersant for the additive(s). Such solubilizers may include, for example, surfactants and/or carboxylic acid solubilizers.

The compositions may further include, for example, viscosity index improvers, anti-foamants, antiwear agents, demulsifiers, anti-oxidants, and other corrosion inhibitors.

The additive composition may comprise the additive components of (B)(i), (B)(ii) and (B)(iii) (such as a three-way additive combination of (B)(i), (B)(ii) and (B)(iii)), diluent, and optional hydrophobic oil solubilizer and/or a dispersant for the additive(s), viscosity index improvers, anti-foamants, antiwear agents, demulsifiers, anti-oxidants, and other corrosion inhibitors and the additive composition may be absent additional components, *i.e.,* additional components are present at 0 wt%, based upon the weight of the additive composition, or if present in the additive composition, the component is present at levels that do not impact the additive composition properties, such as less than 10 ppm, or less than 1 ppm or less than 0.001 ppm.

### Selected Embodiments

Embodiments of the invention include:
Embodiment 1. A method for inhibiting precipitation of asphaltene(s) from a crude oil having an asphaltene content, the method comprising:
   (A) providing a crude oil in a major amount, the crude oil having an asphaltene content; and
   (B) introducing into the crude oil a three-way combination of additives (B)(i), (B)(ii) and (B)(iii), in an effective minor amount, to inhibit precipitation of asphaltene(s) from the crude oil, wherein the three-way combination of additives (B)(i), (B)(ii) and (B)(iii) comprises or is made by admixing:
      (B)(i) a metal (C₁₀ to C₄₀)hydrocarbyl-substituted hydroxybenzoate detergent, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896;
      (B)(ii) a poly(C₂ to C₆)alkenyl-substituted anhydride or poly(C₂ to C₆)alkenyl-substituted acid; and
      (B)(iii) an aliphatic hydrocarbyl acid amide, or an aliphatic hydrocarbyl acid imide, or a combination thereof, wherein said aliphatic hydrocarbyl acid amide and said aliphatic hydrocarbyl acid imide is each independently obtained by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, -diacid or -diol, and wherein the aliphatic alkylene polyamine includes at least two carbon atoms and at least two amine groups, wherein at least one of the amine groups is a primary amine group, and each of said amine groups is bonded to a different carbon atom of the aliphatic alkylene polyamine.
Embodiment 2. A method for improving the transportation of a crude oil, the method comprising the steps of: (i) introducing a minor amount of a three-way combination of additives (B)(i), (B)(ii) and (B)(iii), as defined in Embodiment 1, into (A) a major amount of a crude oil having an asphaltene content; and (ii) transporting said crude oil.
Embodiment 3. A method of preparing a crude oil composition comprising introducing a minor amount of a three-way combination of additives (B)(i), (B)(ii) and (B)(iii), as defined in Embodiment 1, into a major amount of a crude oil having an asphaltene content.
Embodiment 4. A crude oil composition comprising or made by admixing: (A) a crude oil having an asphaltene content in a major amount; and (B) a three-way combination of additives (B)(i), (B)(ii) and (B)(iii), as defined in Embodiment 1, in a minor amount.
Embodiment 5. An additive composition suitable for introduction into to a crude oil having an asphaltene content to inhibit precipitation of asphaltene(s) from the crude oil, the additive composition comprising or made by admixing: a hydrocarbon diluent fluid; and a three-way combination of each of said additive(s) (B)(i), (B)(ii) and (B)(iii), as defined in Embodiment 1.
Embodiment 6. Use of a three-way combination of additives (B)(i), (B)(ii) and (B)(iii), as defined in Embodiment 1, in an effective minor amount in a crude oil having an asphaltene content to inhibit deposition of asphaltene(s) from the crude oil.
Embodiment 7. Use of Embodiment 6, wherein the combination of additives (B)(i), (B)(ii) and (B)(iii) are in the form of a crude oil additive composition.
Embodiment 8. Any one of Embodiments 1 to 7, wherein the ratio of the total combined individual amounts of additives (B)(i) and (B)(ii) on a mass % active ingredient basis to total amount of additive(s) (B)(iii) on a mass % active ingredient basis in the crude oil, based on the total amount of crude oil, is in the range of 8:1 to 1:1.
Embodiment 9. Any one of Embodiments 1 to 8, wherein the treat rate of the three-way additive combination of (B)(i), (B)(ii) and (B)(iii) is greater than or equal to 75 ppm by mass based on the total mass of crude oil.
Embodiment 10. Any one of Embodiments 1 to 9, wherein said metal (C₁₀ to C₄₀)hydrocarbyl-substituted hydroxybenzoate detergent (B)(i) comprises an alkaline earth metal (C₁₀ to C₄₀)hydrocarbyl-substituted salicylate detergent.
Embodiment 11. Any one of Embodiments 1 to 10, wherein the metal (C₁₀ to C₄₀)hydrocarbyl-substituted salicylate detergent comprises a calcium (C₁₀ to C₄₀)hydrocarbyl-substituted salicylate detergent.
Embodiment 12. Any one of Embodiments 1 to 11, wherein the metal (C₁₀ to C₄₀)hydrocarbyl-substituted salicylate detergent has a total base number (TBN) at 100% active mass of less than or equal to 100, preferably less than or equal to 75, mg KOH/g as measured by ASTM D2896.
Embodiment 13. Any one of Embodiments 1 to 12, wherein said poly(C₂ to C₆)alkenyl-substituted anhydride or poly(C₂ to C₆)alkenyl-substituted acid (B)(ii) comprises a polyisobutenyl succinic anhydride or a polyisobutenyl succinic acid.
Embodiment 14. Any one of Embodiments 1 to 13, wherein the aliphatic alkylene polyamine (B)(iii)(a) which is used to obtain said aliphatic hydrocarbyl acid amide or said aliphatic hydrocarbyl acid imide (B)(iii) comprises an alkylene polyamine having from 2 to 20 total number of carbon atoms and from 2 to 12 amine groups.
Embodiment 15. Any one of Embodiments 1 to 14, wherein the aliphatic alkylene polyamine (B)(iii)(a) which is used to obtain said aliphatic hydrocarbyl acid amide or said aliphatic hydrocarbyl acid imide (B)(iii) comprises a polyethylene polyamine.
Embodiment 16. Any one of Embodiments 1 to 15, wherein the aliphatic (C₉ to C₂₉)hydrocarbyl-substituted monocarboxylic acid or derivative thereof (B)(iii)(b) used to obtain said aliphatic hydrocarbyl acid amide (B)(iii) comprises a (C₉ to C₂₉)alkyl-substituted monocarboxylic acid or derivative thereof or (C₉ to C₂₉)alkenyl-substituted monocarboxylic acid or derivative thereof, preferably a (C₁₇)alkyl-substituted monocarboxylic acid or derivative thereof or (C₁₇)alkenyl-substituted monocarboxylic acid or derivative thereof.
Embodiment 17. Any one of Embodiments 1 to 16, wherein the aliphatic hydrocarbyl-substituted anhydride, -diacid or -diol (B)(iii)(c) used to obtain said aliphatic hydrocarbyl acid imide (B)(iii) comprises a poly(C₂ to C₆)alkenyl-substituted anhydride(s), a poly(C₂ to C₆)alkenyl-substituted di-acid(s), or a poly(C₂ to C₆)alkenyl-substituted diols(s), preferably a polyisobutenyl succinic anhydride(s) or polyisobutenyl succinic acid(s).
Embodiment 18. Any one of Embodiments 1 to 18, wherein the aliphatic hydrocarbyl-substituted anhydride, -diacid or -diol (B)(iii)(c) used to obtain said aliphatic hydrocarbyl acid imide (B)(iii) comprises a (C₁₀ to C₃₀)alkyl-substituted anhydride(s) or (C₁₀ to C₃₀)alkenyl-substituted anhydride(s), preferably a (C₁₀ to C₃₀)alkyl-substituted succinic anhydride(s) or (C₁₀ to C₃₀)alkenyl-substituted succinic anhydride(s).
Embodiment 19. Any one of Embodiments 1 to 18, wherein Additive (B)(iii) comprises an aliphatic hydrocarbyl acid amide which is obtainable by reacting (B)(iii)(b) a (C₁₇)alkylsubstituted monocarboxylic acid or derivative thereof or (C₁₇)alkenyl-substituted monocarboxylic acid or derivative thereof and (B)(iii)(a) a polyethylene polyamine having from 4 to 12 total carbon atoms and from 3 to 8, preferably 3 to 6, total nitrogen atoms, as defined and identified herein.
Embodiment 20. Any one of Embodiments 1 to 19, wherein Additive (B)(iii) comprises an aliphatic hydrocarbyl acid amide which is obtainable by reacting said polyethylene polyamine (B)(iii)(a), preferably tetraethylene pentaamine, and (B)(iii)(b) isostearic acid or derivative thereof.
Embodiment 21. Any one of Embodiments 1 to 20, wherein Additive (B)(iii) comprises an aliphatic hydrocarbyl acid imide which is obtainable by reacting (B)(iii)(c) a (C₁₆ to C₂₀)alkylsubstituted succinic anhydride(s) or (C₁₆ to C₂₀)alkenyl-substituted succinic anhydride(s), preferably a (C₁₈)alkyl-substituted succinic anhydride(s) and (C₁₈)alkenyl-substituted succinic anhydride(s), and (B)(iii)(a) a polyethylene polyamine having from 4 to 12 total carbon atoms and from 3 to 8, preferably 3 to 6, total nitrogen atoms.
Embodiment 22. Any one of Embodiments 1 to 21, wherein the three-way combination of additives (B)(i), (B)(ii) and (B)(iii) is introduced into said crude oil during an up-stream or mid-stream crude oil transportation, storage or processing operation.
Embodiment 23. Any one of Embodiments 1 to 22, wherein said crude oil is in the form of a crude oil stream.
Embodiment 24. Any one of Embodiments 1 to 23, wherein said crude oil has been recovered by a secondary or enhanced crude oil recovery process.

This invention further relates to embodiments:
A1. A composition comprising a three-way combination of additives (B)(i), (B)(ii) and (B)(iii) comprising, consisting of, consisting essentially of or made by admixing:
   (B)(i) a metal (C₁₀ to C₄₀)hydrocarbyl-substituted hydroxybenzoate detergent, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896;
   (B)(ii) a poly(C₂ to C₆)alkenyl-substituted anhydride or poly(C₂ to C₆)alkenyl-substituted acid; and
   (B)(iii) an aliphatic hydrocarbyl acid amide, or an aliphatic hydrocarbyl acid imide, or a combination thereof, wherein said aliphatic hydrocarbyl acid amide and said aliphatic hydrocarbyl acid imide is each independently obtained by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, -diacid or -diol, and wherein the aliphatic alkylene polyamine includes at least two carbon atoms and at least two amine groups, wherein at least one of the amine groups is a primary amine group, and each of said amine groups is bonded to a different carbon atom of the aliphatic alkylene polyamine.
A2. An additive composition comprising or made by admixing a hydrocarbon diluent fluid and the three-way combination of each of additive(s) (B)(i), (B)(ii) and (B)(iii)of paragraph A1.
A3. A crude oil composition comprising or made by admixing crude oil containing asphaltenes and the three-way combination of each of additive(s) (B)(i), (B)(ii) and (B)(iii) of paragraph A1.
A4. The composition of paragraph A3, wherein the ratio of the total combined individual amounts of additives (B)(i) and (B)(ii) on a mass % active ingredient basis to total the amount of additive(s) (B)(iii) on a mass % active ingredient basis in the crude oil, based on the total amount of crude oil, is in the range of 8:1 to 1:1.
A5. The composition of paragraph A3 or A4, wherein the three-way additive combination of (B)(i), (B)(ii) and (B)(iii) is present at greater than or equal to 75 ppm by mass based on the total mass of crude oil.
A6. The composition of paragraph A1, A2, A3, A4, or A5, wherein said metal (C₁₀ to C₄₀)hydrocarbyl-substituted hydroxybenzoate detergent (B)(i) comprises an alkaline earth metal (C₁₀ to C₄₀)hydrocarbyl-substituted salicylate detergent.
A7. The composition of paragraph A1, A2, A3, A4, or A5, wherein the metal (C₁₀ to C₄₀)hydrocarbyl-substituted salicylate detergent comprises a calcium (C₁₀ to C₄₀)hydrocarbyl-substituted salicylate detergent.
A8. The composition of paragraph A6 or A7, wherein the metal (C₁₀ to C₄₀)hydrocarbyl-substituted salicylate detergent has a total base number (TBN) at 100% active mass of less than or equal to 100, preferably less than or equal to 75, mg KOH/g as measured by ASTM D2896. A9. The composition of paragraph A1, A2, A3, A4, A5, A6, A7, or A8, wherein said poly(C₂ to C₆)alkenyl-substituted anhydride or poly(C₂ to C₆)alkenyl-substituted acid (B)(ii) comprises a polyisobutenyl succinic anhydride or a polyisobutenyl succinic acid.
A10. The composition of paragraph A1, A2, A3, A4, A5, A6, A7, A8, or A9, wherein the aliphatic alkylene polyamine (B)(iii)(a) which is used to obtain said aliphatic hydrocarbyl acid amide or said aliphatic hydrocarbyl acid imide (B)(iii) comprises an alkylene polyamine having from 2 to 20 total number of carbon atoms and from 2 to 12 amine groups.
A11. The composition of paragraph A1, A2, A3, A4, A5, A6, A7, A8, A9, or A10, wherein the aliphatic alkylene polyamine (B)(iii)(a) which is used to obtain said aliphatic hydrocarbyl acid amide or said aliphatic hydrocarbyl acid imide (B)(iii) comprises a polyethylene polyamine.
A12. The composition of paragraph A1, A2, A3, A4, A5, A6, A7, A8, A9, A10, or A11, wherein the aliphatic (C₉ to C₂₉)hydrocarbyl-substituted monocarboxylic acid or derivative thereof (B)(iii)(b) used to obtain said aliphatic hydrocarbyl acid amide (B)(iii) comprises a (C₉ to C₂₉)alkyl-substituted monocarboxylic acid or derivative thereof or (C₉ to C₂₉)alkenyl-substituted monocarboxylic acid or derivative thereof, preferably a (C₁₇)alkyl-substituted monocarboxylic acid or derivative thereof or (C₁₇)alkenyl-substituted monocarboxylic acid or derivative thereof.
A13. The composition of paragraph A1, A2, A3, A4, A5, A6, A7, A8, A9, A10, A11, or A12, wherein the aliphatic hydrocarbyl-substituted anhydride, -diacid or -diol (B)(iii)(c) used to obtain said aliphatic hydrocarbyl acid imide (B)(iii) comprises a poly(C₂ to C₆)alkenyl-substituted anhydride(s), a poly(C₂ to C₆)alkenyl-substituted di-acid(s), or a poly(C₂ to C₆)alkenyl-substituted diols(s), preferably a polyisobutenyl succinic anhydride(s) or polyisobutenyl succinic acid(s).
A14. The composition of paragraph A1, A2, A3, A4, A5, A6, A7, A8, A9, A10, A11, A12, or A13, wherein the aliphatic hydrocarbyl-substituted anhydride, -diacid or -diol (B)(iii)(c) used to obtain said aliphatic hydrocarbyl acid imide (B)(iii) comprises a (C₁₀ to C₃₀)alkylsubstituted anhydride(s) or (C₁₀ to C₃₀)alkenyl-substituted anhydride(s), preferably a (C₁₀ to C₃₀)alkyl-substituted succinic anhydride(s) or (C₁₀ to C₃₀)alkenyl-substituted succinic anhydride(s).
A15. The composition of paragraph A1, A2, A3, A4, A5, A6, A7, A8, A9, A10, A11, A12, A13, or A14, wherein Additive (B)(iii) comprises an aliphatic hydrocarbyl acid amide which is obtainable by reacting (B)(iii)(b) a (C₁₇)alkyl-substituted monocarboxylic acid or derivative thereof or (C₁₇)alkenyl-substituted monocarboxylic acid or derivative thereof and (B)(iii)(a) a polyethylene polyamine having from 4 to 12 total carbon atoms and from 3 to 8, preferably 3 to 6, total nitrogen atoms, as defined and identified herein.
A16. The composition of paragraph A1, A2, A3, A4, A5, A6, A7, A8, A9, A10, A11, A12, A13, A14, or A15, wherein Additive (B)(iii) comprises an aliphatic hydrocarbyl acid amide which is obtainable by reacting said polyethylene polyamine (B)(iii)(a), preferably tetraethylene pentaamine, and (B)(iii)(b) isostearic acid or derivative thereof.
A17. The composition of paragraph A1, A2, A3, A4, A5, A6, A7, A8, A9, A10, A11, A12, A13, A14, A15, or A16, wherein Additive (B)(iii) comprises an aliphatic hydrocarbyl acid imide which is obtainable by reacting (B)(iii)(c) a (C₁₆ to C₂₀)alkyl-substituted succinic anhydride(s) or (C₁₆ to C₂₀)alkenyl-substituted succinic anhydride(s), preferably a (C₁₈)alkylsubstituted succinic anhydride(s) and (C₁₈)alkenyl-substituted succinic anhydride(s), and (B)(iii)(a) a polyethylene polyamine having from 4 to 12 total carbon atoms and from 3 to 8, preferably 3 to 6, total nitrogen atoms.
A18. A method for inhibiting precipitation of asphaltene(s) from a crude oil having an asphaltene content, the method comprising:
   (A) providing a crude oil in a major amount, the crude oil having an asphaltene content; and
   (B) introducing into the crude oil the composition of any of paragraphs A1 to A17.
A19. The method of paragraph A18, wherein the three-way combination of additives (B)(i), (B)(ii) and (B)(iii) is introduced into said crude oil during an up-stream or mid-stream crude oil transportation, storage or processing operation.
A20. The method of paragraph A18 or A19, wherein said crude oil is in the form of a crude oil stream.
A21. The method of paragraph A18, A19 or A20, wherein said crude oil has been recovered by a secondary or enhanced crude oil recovery process.
A22. A method for improving the transportation of a crude oil, the method comprising the steps of: (i) introducing a minor amount of the composition of any of paragraphs A1 to A17, into (A) a major amount of a crude oil having an asphaltene content; and (ii) transporting said crude oil.
A23. A method of preparing a crude oil composition comprising introducing a minor amount of the the composition of any of paragraphs A1 to A17 into a major amount of a crude oil having an asphaltene content.
A24. A crude oil composition comprising or made by admixing: (A) a crude oil having an asphaltene content in a major amount; and (B) the composition of any of paragraphs A1 to A17 in a minor amount.
A25. A method to inhibit deposition of asphaltene(s) from the crude oil comprising combining the composition of any of paragraphs A1 to A17, in an effective minor amount with a crude oil having an asphaltene content and inhibiting the deposition of asphaltene(s) from the crude oil.
A26. A method to inhibit deposition of asphaltene(s) from the crude oil comprising combining the additive composition of paragraph A2 or any of paragraphs A5 to A17 with a crude oil having an asphaltene content and inhibiting the deposition of asphaltene(s) from the crude oil.
A27. A crude oil composition comprising or made by admixing crude oil containing asphaltenes and (B)(i) a metal (C₁₀ to C₄₀)hydrocarbyl-substituted hydroxybenzoate detergent, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896;
   optionally, (B)(ii) a poly(C₂ to C₆)alkenyl-substituted anhydride or poly(C₂ to C₆)alkenyl-substituted acid; and,
   optionally, (B)(iii) an aliphatic hydrocarbyl acid amide, or an aliphatic hydrocarbyl acid imide, or a combination thereof, wherein said aliphatic hydrocarbyl acid amide and said aliphatic hydrocarbyl acid imide is each independently obtained by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, -diacid or -diol, and wherein the aliphatic alkylene polyamine includes at least two carbon atoms and at least two amine groups, wherein at least one of the amine groups is a primary amine group, and each of said amine groups is bonded to a different carbon atom of the aliphatic alkylene polyamine.

### EXAMPLES

The present invention is illustrated by but in no way limited to the following examples.

### COMPONENTS

The following components as detailed below were used in the examples:

### Additive (B)(i) - Calcium Hydrocarbyl-Substituted Salicylate Detergent (SD)

64SD - An essentially neutral calcium hydrocarbyl-substituted salicylate detergent having a TBN at 100% active mass of 64 mg KOH/g as measured by ASTM D2896. Available from Infineum UK Ltd.

225CSD - A comparative overbased calcium hydrocarbyl-substituted salicylate detergent having a TBN at 100% active mass of 225 mg KOH/g as measured by ASTM D2896. Available from Infineum UK Ltd.

### Additive (B)(ii) - Polyisobutenyl Succinic Anhydride

PIBSA - A polyisobutenyl succinic anhydride (PIBSA) wherein the number average molecular weight (Mn) of the polyisobutenyl substituent is 950 daltons. Available from Infineum UK Ltd.

### Additive (B)(iii) Aliphatic Hydrocarbyl Acid Amides (AA)

AA 1 - An aliphatic (C₁₈)hydrocarbyl acid amide obtainable by reaction of isostearic acid and tertraethylene pentaamine. Available from Infineum UK Ltd.

AA 2 - An aliphatic (C₁₈)hydrocarbyl acid amide obtainable by reaction of octadec-9-enoic acid and 1-dimethylamino-3-aminopropane. Available from Arkema as CecaBase 3860.

### Additive (B)(iii) Aliphatic Hydrocarbyl Acid Imides (AI)

AI 1 - An aliphatic hydrocarbyl acid imide obtainable by reaction of octadecenyl substituted succinic anhydride and tetraethylene pentaamine. Available from Infineum UK Ltd.

AI 2 - An aliphatic hydrocarbyl acid imide obtainable by reaction of octadecenyl substituted succinic anhydride and diethylene triamine. Available from Infineum UK Ltd.

AI 3 -An aliphatic hydrocarbyl acid imide obtainable by reaction of a polyisobutenyl succinic acid or anhydride wherein the number average molecular weight (Mn) of the polyisobutenyl substituent is 950 daltons and pentaethylene hexamine. Available from Infineum UK Ltd.

AI 4 -An aliphatic hydrocarbyl acid imide obtainable by reaction of a polyisobutenyl succinic acid or anhydride wherein the number average molecular weight (Mn) of the polyisobutenyl substituent is 450 daltons and pentaethylene hexamine. Available from Infineum UK Ltd.

Isostearic Acid (Acid only used in Comparative Example 10) referenced as ISA in Table 1.

### Crude Oil

A Gulf of Mexico heavy crude oil having an asphaltene content of approximately 7 mass %.

### Asphaltene Deposition Test

Tests were carried out using 40 ml samples of the crude oil. The crude oil alone in the absence of any additives was used as a control. The respective additive or respective combination of additives were introduced into the crude oil so that in each case the combined treat rate of all additives added to crude oil, on an active ingredient basis, was 200 ppm, based on the total mass of the crude oil.

Composition details of each sample tested, which includes the Control Crude Oil, Comparative Examples 1 to 10, and Inventive Examples 1 to 5, are detailed in Table 1 (ppm by mass). When a sample includes a two-way combination of additives comprising (i) a calcium salicylate detergent and (ii) PIBSA (Comparative Examples 2 and 4), then the ratio of the amount of calcium salicylate detergent (mass %) relative to the amount of PIBSA (mass %), on an active ingredient basis, is identical in each sample and is 2.9:1. When a sample includes a three-way combination of additives comprising (i) calcium salicylate detergent, (ii) PIBSA, and (iii) an acid amide (AA 1 or AA2) or acid imide (AI 1 to AI 4) (Inventive Examples 1 to 5, then the ratio the amount of calcium salicylate detergent (mass %) relative to the amount of PIBSA (mass %) relative to the amount acid amide or acid imide (mass %), on an active ingredient basis, is identical in each sample and is 2.9:1:1.3. Accordingly, the ratio of the amount of calcium salicylate detergent (mass %) relative to the amount of PIBSA (mass %) in each sample of the two-way and each sample of three-way combination of additives, on an active ingredient basis, is identical and is 2.9:1.

The test apparatus comprises a sealable High Pressure High Temperature Pressure (HPHT) cell having a sealable pressure head. The HPTP cell includes a rotateable impeller, a gas charge/gas discharge line to permit the cell to be pressurized with a gas and subsequently depressurized, a pressure recorder, a temperature recorder and a heating element. The impeller is driven by a controllable extra-cellular drive means via a magnetic coupling. Accordingly, the impeller may be rotated at a constant predetermined speed to provide a constant predetermined sheer force to a crude oil sample in the cell. The HPTP cell permits reproducible evaluation of asphaltene deposition from a crude oil sample at a predetermined specific constant shear rate, at a predetermined specific pressure and a predetermined specific constant temperature, over a predetermined time period.

An additive or combination of additive(s) was blended with the crude oil (40 ml) at room temperature and pressure before the crude oil was introduced into the HPHT cell. The crude oil sample, containing the additive(s) was then dosed into the HPHT cell. The cell including the crude oil sample was pressurized to 4300 PSI (approximately 310 bar) at 38°C (approximately 100° Fahrenheit(F)) by introducing a substantially inert hydrocarbon gas, such as Green Canyon gas consisting essentially of methane (87 mole %), ethane (7.5 mole %), propane (3 mole %), butane/iso-butane (1.3 mole %), pentanes (0.4 mole %), and nitrogen (0.4 mole %), into the cell The cell was then heated at 95°C (approximately 200°F) for the duration of the test (20 hours) and the impeller driven to provide a shear rate of 1000 s⁻¹, this provided a constant pressure of 4500 PSI throughout the duration of the test. After 20 hours, the cell is depressurized and allowed to cool to room temperature. The impeller was removed from the cell and dipped (*i.e*., washed) into methyl ethyl ketone to remove residual crude oil. The dried impeller including asphaltene deposits was then weighed. The % change of asphaltene precipitation from a crude oil sample including one or more additives relative to the crude oil control sample alone (*i.e.,* not including any additives) is calculated according to the following formula: (Deposit mass of sample including additive (mg)/Deposit mass of crude oil control sample x 100) - 100.

The results of the tests are presented in Table 1.

The results demonstrate the following:
1. The use of a high TBN calcium salicylate detergent (TBN 225 mg KOH/g) alone (Comparative Example 1) provides excellent inhibition of asphaltene deposition.
2. The use of a two-way additive combination of a high TBN calcium salicylate detergent (TBN 225 mg KOH/g) and PIBSA improves inhibition of asphaltene deposition compared to use of the high TBN calcium detergent alone (compare Comparative Example 2 with Comparative Example 1).
3. The use of a low TBN calcium salicylate detergent (TBN 64 mg KOH/g) alone (Comparative Example 3) significantly promotes asphaltene deposition from the crude oil (Comparative Example 3). This may be reversed by inclusion of a second PIBSA additive (Comparative Example 4), but the inhibition of asphaltene deposition relative to crude oil alone is marginal and significantly inferior to using the corresponding two-way additive combination including high TBN calcium salicylate detergent (TBN 225 mg KOH/g) (compare Comparative Example 4 with Comparative Example 2).
4. The acid amides AA 1, AA 2, and acid imide AI 1 inhibit asphaltene deposition from the crude oil to varying extents when the crude oil is dosed with a relatively large amount (200 ppm) of each of these additives (see Comparative Examples 5 to 7).
5. The use of an inventive three-way combination of additives, such as a calcium salicylate detergent (TBN 64 mg KOH/g), PIBSA and acid amide AA 1 (see Inventive Example 1) or acid imide AI 1 (see Inventive Example 2), provides a significant synergistic inhibition of asphaltene deposition. This synergistic inhibition of asphaltene deposition represents more than a cumulative effect achievable by each additive (compare Inventive Example 1 with Comparative Examples 3, 4 and 5 and compare Inventive Example 2 with Comparative Examples 3, 4 and 7). Furthermore, this synergistic technical effect is achievable by using a relatively low dose of the acid amide AA 1 or acid imide AI 1 in the three-way combination of additives.
6. The use of an inventive three-way combination of additives, such as a calcium salicylate detergent (TBN 64 mg KOH/g), PIBSA and acid amide AA 1 (see Inventive Example 1) provides a significant synergistic inhibition of asphaltene deposition from crude oil. In contrast, a comparative corresponding three-way combination of additives comprising calcium salicylate detergent (TBN 64 mg KOH/g), PIBSA and isostearic acid (ISA) as a replacement for acid amide AA 1 (see Comparative Example 10) promotes asphaltene deposition from crude oil, thereby evidencing the criticality of the presence of acid amide in the inventive three-way combination of additives to prevent asphaltene deposition.
7. In contrast, using the same acid amide additive AA 1 or acid imide AI 1 additive in combination with a corresponding two-way combination of additives comprising a high TBN calcium salicylate detergent (TBN 225 mg KOH/g) and PIBSA, thereby producing a corresponding three-way combination of additives, promotes asphaltene deposition from the crude oil relative to the use of the two-way additive combination (compare Comparative Example 8 with comparative Example 2 and Comparative Example 9 with Comparative Example 2).
8. Further, the use of acid amide AA 1 in combination with a corresponding two-way combination of additives comprising a high TBN calcium salicylate detergent (TBN 225 mg KOH/g) and PIBSA (Comparative Example 8) increases asphaltene deposition from the crude oil, whereas the use of acid amide AA 1 in the inventive combination of additives synergistically reduces asphaltene precipitation from the crude oil (Inventive Example 1).
9. The use of acid amide AA 2 or each of acid imides AI 2, AI 3 or AI 4, respectively, in an inventive three-way combination of additives including a low TBN calcium salicylate detergent (TBN 64 mg KOH/g) and PIBSA (see inventive Examples 3 to 5), provides a significant inhibition of asphaltene deposition from the crude oil.
10. The use of PIBSA-PAM acid imide Mₙ 450 (AI 4, Inventive Example 5)) in the inventive three-way combination of additives provides improved inhibition of asphaltene deposition from the crude oil compared with the use of PIBSA-PAM acid imide Mₙ 900 (AI 4, Inventive Example 4).
11. The use of pentaethylene pentaamine to form acid imide (AI 1) in the inventive three-way additive combination (Inventive Example 2) provides improved inhibition of asphaltene deposition compared with using the corresponding acid imide formed from tetraethylene triamine (AI 2, Inventive Example 3).

**Table 1**

| Example | 64SD (ppm) | 225CSD (ppm) | PIBSA (ppm) | AA 1 (ppm) | AA 2 (ppm) | A1 1 (ppm) | A1 2 (ppm) | AI 3 (ppm) | AI 4 (ppm) | ISA (ppm) | Total Treat Rate (ppm) | Asphaltene Deposits mass (mg) | % Change Asphaltene Deposits |
|---|---|---|---|---|---|---|---|---|---|---|---|---|---|
| Crude Oil | - | - | - | - | - | - | - | - | - | - | 200 | 544 | 0 |
| Comp 1 | - | ✔(200) | - | - | - | - | - | - | - | - | 200 | 212 | -61 |
| Comp 2 | - | ✔(149) | ✔(51) | - | - | - | - | - | - | - | 200 | 179 | -67 |
| Comp 3 | ✔(200) | - | - | - | - | - | - | - | - | - | 200 | 1229 | +126 |
| Comp 4 | ✔(149) | - | ✔(51) | - | - | - | - | - | - | - | 200 | 457 | -16 |
| Comp 5 | - | - | - | ✔(200) | - | - | - | - | - | - | 200 | 326 | -40 |
| Comp 6 | - | - | - | - | ✔(200) | - | - | - | - | - | 200 | 210 | -61 |
| Comp 7 | - | - | - | - | - | ✔(200) | - | - | - | - | 200 | 473 | -13 |
| Inventive 1 | ✔(111.5) | - | ✔(38.5) | ✔(50) | - | - | - | - | - | - | 200 | 133 | -75 |
| Comp 8 | | ✔(111.5) | ✔(38.5) | ✔(50) | - | - | - | - | - | - | 200 | 626 | +15 |
| Comp 10 | ✔(111.5) | - | ✔(38.5) | - | - | - | - | - | - | ✔(50) | 200 | 1285 | +136 |
| Inventive 2 | ✔(111.5) | - | ✔(38.5) | - | - | ✔(50) | - | - | - | - | 200 | 147 | -73 |
| Comp 9 | | ✔(111.5) | ✔(38.5) | - | - | ✔(50) | - | - | - | - | 200 | 235 | -57 |
| Inventive 3 | ✔(111.5) | - | ✔(38.5) | - | - | - | ✔(50) | - | - | - | 200 | 275 | -49 |
| Inventive 4 | ✔(111.5) | - | ✔(38.5) | - | - | - | - | ✔(50) | | - | 200 | 385 | -29 |
| Inventive 5 | ✔(111.5) | - | ✔(38.5) | - | - | - | - | - | ✔(50) | - | 200 | 195 | -64 |

## Claims

1. A method for inhibiting precipitation of asphaltene(s) from a crude oil having an asphaltene content, the method comprising:
(A) providing a crude oil in a major amount, the crude oil having an asphaltene content; and
(B) introducing into the crude oil a three-way combination of additives (B)(i), (B)(ii) and (B)(iii), in an effective minor amount, to inhibit precipitation of asphaltene(s) from the crude oil, wherein the three-way combination of additives (B)(i), (B)(ii) and (B)(iii) comprises or is made by admixing:
(B)(i) a metal (C₁₀ to C₄₀)hydrocarbyl-substituted hydroxybenzoate detergent, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896;
(B)(ii) a poly(C₂ to C₆)alkenyl-substituted anhydride or poly(C₂ to C₆)alkenyl-substituted acid; and
(B)(iii) an aliphatic hydrocarbyl acid amide, or an aliphatic hydrocarbyl acid imide, or a combination thereof, wherein said aliphatic hydrocarbyl acid amide and said aliphatic hydrocarbyl acid imide is each independently obtained by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, -diacid or -diol, and wherein the aliphatic alkylene polyamine includes at least two carbon atoms and at least two amine groups, wherein at least one of the amine groups is a primary amine group, and each of said amine groups is bonded to a different carbon atom of the aliphatic alkylene polyamine.

2. A method for improving the transportation of a crude oil, the method comprising the steps of: (i) introducing a minor amount of a three-way combination of additives (B)(i), (B)(ii) and (B)(iii), as defined in claim 1, into (A) a major amount of a crude oil having an asphaltene content; and (ii) transporting said crude oil.

3. A method of preparing a crude oil composition comprising introducing a minor amount of a three-way combination of additives (B)(i), (B)(ii) and (B)(iii), as defined in claim 1, into a major amount of a crude oil having an asphaltene content.

4. A crude oil composition comprising or made by admixing: (A) a crude oil having an asphaltene content in a major amount; and (B) a three-way combination of additives (B)(i), (B)(ii) and (B)(iii), as defined in claim 1, in a minor amount.

5. An additive composition suitable for introduction into to a crude oil having an asphaltene content to inhibit precipitation of asphaltene(s) from the crude oil, the additive composition comprising or made by admixing: a hydrocarbon diluent fluid; and a three-way combination of each of said additive(s) (B)(i), (B)(ii) and (B)(iii), as defined in claim 1.

6. Use of a three-way combination of additives (B)(i), (B)(ii) and (B)(iii), as defined in claim 1, in an effective minor amount in a crude oil having an asphaltene content to inhibit deposition of asphaltene(s) from the crude oil.

7. Use as claimed in claim 6, wherein the combination of additives (B)(i), (B)(ii) and (B)(iii) are in the form of a crude oil additive composition.

8. A method, composition or use as claimed in any one of the preceding claims, wherein the ratio of the total combined individual amounts of additives (B)(i) and (B)(ii) on a mass % active ingredient basis to total the amount of additive(s) (B)(iii) on a mass % active ingredient basis in the crude oil, based on the total amount of crude oil, is in the range of 8:1 to 1:1.

9. A method, composition or use as claimed in any one of the preceding claims, wherein the treat rate of the three-way additive combination of (B)(i), (B)(ii) and (B)(iii) is greater than or equal to 75 ppm by mass based on the total mass of crude oil.

10. A method, composition or use as claimed in any one of the preceding claims, wherein said metal (C₁₀ to C₄₀)hydrocarbyl-substituted hydroxybenzoate detergent (B)(i) comprises an alkaline earth metal (C₁₀ to C₄₀)hydrocarbyl-substituted salicylate detergent.

11. A method, composition or use as claimed in claim 10, wherein the metal (C₁₀ to C₄₀)hydrocarbyl-substituted salicylate detergent comprises a calcium (C₁₀ to C₄₀)hydrocarbyl-substituted salicylate detergent.

12. A method, composition or use as claimed in claim 11, wherein the metal (C₁₀ to C₄₀)hydrocarbyl-substituted salicylate detergent has a total base number (TBN) at 100% active mass of less than or equal to 100, preferably less than or equal to 75, mg KOH/g as measured by ASTM D2896.

13. A method, composition or use as claimed in any one of the preceding claims, wherein said poly(C₂ to C₆)alkenyl-substituted anhydride or poly(C₂ to C₆)alkenyl-substituted acid (B)(ii) comprises a polyisobutenyl succinic anhydride or a polyisobutenyl succinic acid.

14. A method, composition or use as claimed in any one of the preceding claims, wherein the aliphatic alkylene polyamine (B)(iii)(a) which is used to obtain said aliphatic hydrocarbyl acid amide or said aliphatic hydrocarbyl acid imide (B)(iii) comprises an alkylene polyamine having from 2 to 20 total number of carbon atoms and from 2 to 12 amine groups.

15. A method, composition or use as claimed in any one of the preceding claims, wherein the aliphatic alkylene polyamine (B)(iii)(a) which is used to obtain said aliphatic hydrocarbyl acid amide or said aliphatic hydrocarbyl acid imide (B)(iii) comprises a polyethylene polyamine.

16. A method, composition or use as claimed in any one of the preceding claims, wherein the aliphatic (C₉ to C₂₉)hydrocarbyl-substituted monocarboxylic acid or derivative thereof (B)(iii)(b) used to obtain said aliphatic hydrocarbyl acid amide (B)(iii) comprises a (C₉ to C₂₉)alkyl-substituted monocarboxylic acid or derivative thereof or (C₉ to C₂₉)alkenyl-substituted monocarboxylic acid or derivative thereof, preferably a (C₁₇)alkyl-substituted monocarboxylic acid or derivative thereof or (C₁₇)alkenyl-substituted monocarboxylic acid or derivative thereof.

17. A method, composition or use as claimed in any one of the preceding claims, wherein the aliphatic hydrocarbyl-substituted anhydride, -diacid or -diol (B)(iii)(c) used to obtain said aliphatic hydrocarbyl acid imide (B)(iii) comprises a poly(C₂ to C₆)alkenyl-substituted anhydride(s), a poly(C₂ to C₆)alkenyl-substituted di-acid(s), or a poly(C₂ to C₆)alkenyl-substituted diols(s), preferably a polyisobutenyl succinic anhydride(s) or polyisobutenyl succinic acid(s).

18. A method, composition or use as claimed in any one of claims 1 to 16, wherein the aliphatic hydrocarbyl-substituted anhydride, -diacid or -diol (B)(iii)(c) used to obtain said aliphatic hydrocarbyl acid imide (B)(iii) comprises a (C₁₀ to C₃₀)alkyl-substituted anhydride(s) or (C₁₀ to C₃₀)alkenyl-substituted anhydride(s), preferably a (C₁₀ to C₃₀)alkyl-substituted succinic anhydride(s) or (C₁₀ to C₃₀)alkenyl-substituted succinic anhydride(s).

19. A method, composition or use as claimed in any one of the preceding claims, wherein Additive (B)(iii) comprises an aliphatic hydrocarbyl acid amide which is obtainable by reacting (B)(iii)(b) a (C₁₇)alkyl-substituted monocarboxylic acid or derivative thereof or (C₁₇)alkenyl-substituted monocarboxylic acid or derivative thereof and (B)(iii)(a) a polyethylene polyamine having from 4 to 12 total carbon atoms and from 3 to 8, preferably 3 to 6, total nitrogen atoms, as defined and identified herein.

20. A method, composition or use as claimed in claim 19, wherein Additive (B)(iii) comprises an aliphatic hydrocarbyl acid amide which is obtainable by reacting said polyethylene polyamine (B)(iii)(a), preferably tetraethylene pentaamine, and (B)(iii)(b) isostearic acid or derivative thereof.

21. A method, composition or use as claimed in claims 1 to 16, wherein Additive (B)(iii) comprises an aliphatic hydrocarbyl acid imide which is obtainable by reacting (B)(iii)(c) a (C₁₆ to C₂₀)alkyl-substituted succinic anhydride(s) or (C₁₆ to C₂₀)alkenyl-substituted succinic anhydride(s), preferably a (C₁₈)alkyl-substituted succinic anhydride(s) and (C₁₈)alkenyl-substituted succinic anhydride(s), and (B)(iii)(a) a polyethylene polyamine having from 4 to 12 total carbon atoms and from 3 to 8, preferably 3 to 6, total nitrogen atoms.

22. A method, composition or use as claimed in any one of the preceding claims, wherein the three-way combination of additives (B)(i), (B)(ii) and (B)(iii) is introduced into said crude oil during an up-stream or mid-stream crude oil transportation, storage or processing operation.

23. A method, composition or use as claimed in claim 22, wherein said crude oil is in the form of a crude oil stream.

24. A method, composition or use as claimed in any one of the preceding claims, wherein said crude oil has been recovered by a secondary or enhanced crude oil recovery process.

25. A three-way combination of additives (B)(i), (B)(ii) and (B)(iii) comprising or made by admixing:
(B)(i) a metal (C₁₀ to C₄₀)hydrocarbyl-substituted hydroxybenzoate detergent, wherein the metal of said metal (C₁₀ to C₄₀)hydrocarbyl-substituted hydroxybenzoate detergent has a valency of +1 or +2 and wherein said metal (C₁₀ to C₄₀)hydrocarbyl-substituted hydroxybenzoate detergent has a total base number (TBN) at 100% active mass of less than or equal to 135 mg KOH/g as measured by ASTM D2896;
(B)(ii) a poly(C₂ to C₆)alkenyl-substituted anhydride or poly(C₂ to C₆)alkenyl-substituted acid; and
(B)(iii) an aliphatic hydrocarbyl acid amide, or an aliphatic hydrocarbyl acid imide, or a combination thereof, wherein said aliphatic hydrocarbyl acid amide and said aliphatic hydrocarbyl acid imide is each independently obtained by reacting (B)(iii)(a) an aliphatic alkylene polyamine with (B)(iii)(b) an aliphatic (C₁₀ to C₃₀)hydrocarbyl-substituted monocarboxylic acid or derivative thereof or with (B)(iii)(c) an aliphatic hydrocarbyl-substituted anhydride, -diacid or -diol, and wherein the aliphatic alkylene polyamine includes at least two carbon atoms and at least two amine groups, wherein at least one of the amine groups is a primary amine group, and each of said amine groups is bonded to a different carbon atom of the aliphatic alkylene polyamine.

26. A crude oil composition comprising or made by admixing crude oil containing asphaltenes and the three-way combination of each of additive(s) (B)(i), (B)(ii) and (B)(iii) of claim 25.
